# EUROPEAN PATENT SPECIFICATION

(11) **EP 1 210 758 B1**
(45) Date of publication and mention of the grant of the patent: **05.04.2006**
(21) Application number: 00957258.7
(22) Date of filing: 28.07.2000
(51) Int. Cl.: H02J 9/06

(54) **UNINTERRUPTIBLE POWER SUPPLIES WITH DUAL-SOURCING CAPABILITY AND METHODS OF OPERATION THEREOF**
UNTERBRECHUNGSFREIE STROMVERSORGUNGEN MIT MÖGLICHKEIT DOPPELTER QUELLEN UND BETRIEBSVERFAHREN
ALIMENTATIONS SANS COUPURE A DOUBLE CAPACITE D'APPROVISIONNEMENT ET LEURS PROCEDES DE FONCTIONNEMENT

(30) Priority: 13.08.1999 US 374180; 22.09.1999 US 401423
(43) Date of publication of application: 05.06.2002
(73) Proprietor: Eaton Power Quality Corporation, Cleveland, Ohio 44114 (US)
(72) Inventor: THOMMES, James, San Diego, CA 92130 (US); JOHNSON, Robert, W., Raleigh, NC 27615 (US); RADDI, William, J., Raleigh, NC 27615 (US)
(74) Representative: Wagner & Geyer
(86) International application number: PCT/US2000/020593
(87) International publication number: WO 2001/013491

(56) References cited:
- EP-A- 1 005 132
- US-A- 4 894 765
- US-A- 5 126 585
- US-A- 5 343 079
- ROOIJ DE M A ET AL: "A NOVEL UNITY POWER FACTOR LOW EMI UNINTERRUPTABLE POWER SUPPLY" CONFERENCE RECORD OF THE IEEE INDUSTRY APPLICATIONS CONFERENCE ANNUAL MEETING (IAS),US,NEW YORK, IEEE, vol. MEETING 31, 6 October 1996 (1996-10-06), pages 1278-1283, XP000731261 ISBN: 0-7803-3545-7

## Description

### Reference to Parent Application

The present application is a continuation-in-part of United States Patent Application Serial No. 09/374,180, filed August 13, 1999.

### Field Of The Invention

The present invention relates to electrical power devices and methods of operation thereof, and more particularly, to uninterruptible power supplies (UPSs) and methods of operation thereof.

### Background Of The Invention

Uninterruptible power supplies (UPSs) are power conversion devices that are commonly used to provide conditioned, reliable power for computer networks, telecommunications networks, medical equipment and the like. UPSs are widely used with computers and similar computing devices, including but not limited to personal computers, workstations, mini computers, network servers, disk arrays and mainframe computers, to insure that valuable data is not lost and that the device can continue to operate notwithstanding temporary loss of an AC utility source. UPSs typically provide power to such electronic equipment from a secondary source, such as a battery, in the event that a primary alternating current (AC) utility source drops out (blackout) or fails to provide a proper voltage (brownout).

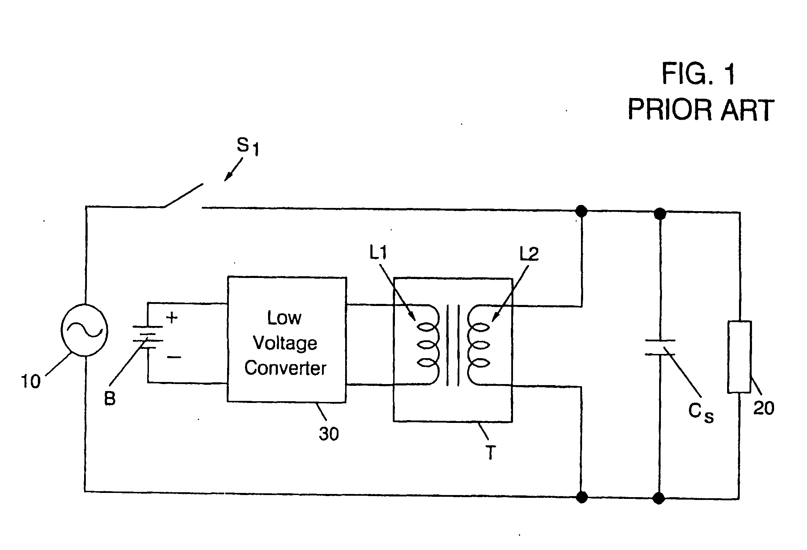

Conventional UPSs may be classified into categories. Referring to Fig. 1, a typical off-line UPS disconnects a load from a primary AC source **10** when the primary AC source fails or is operating in a degraded manner, allowing the load to be served from a secondary source such as a battery. The AC power source **10** is connected in series with a switch **S**_{**1**}, producing an AC voltage across a load **20** when the switch **S**_{**1**} is closed. Energy storage is typically provided in the form of a storage capacitor **C**_{**S**}. The secondary power source, here a battery **B,** is connected to the load **20** via a low voltage converter **30** and a transformer **T,** When the AC power source **10** fails, the switch **S**_{**1**} is opened, causing the load to draw power from the battery **B**. The low voltage converter **30** typically is an inverter that produces a quasi-square wave or sine wave voltage on a first winding **L**_{**1**} of the transformer **T** from a DC voltage produced by the battery **B.** The first winding **L**_{**1**} is coupled to a second winding **L**_{**1**} of the transformer **T** connected across the load **20**. When the AC power source is operational, *i.e.,* when the switch **S**_{**1**} is closed, the battery **B** may be charged using the low-voltage converter **30** or a separate battery charger circuit (not shown).

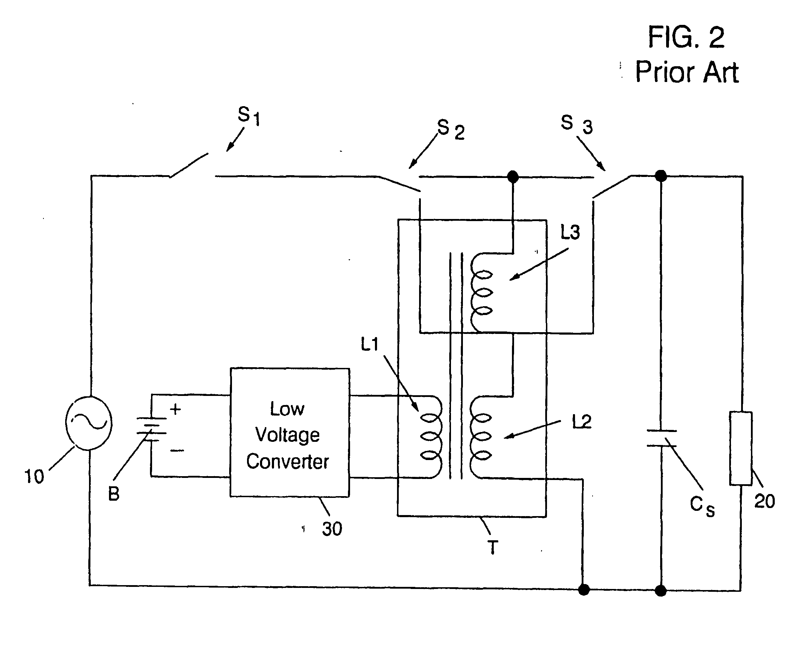

A line interactive (LIA) UPS topology is illustrated in Fig. 2. Here, the transformer **T** has a third winding **L**_{**3**} that may be connected in series with the load **20** using switches **S**_{**2**}**, S**_{**3**} to "buck" or "boost" the voltage applied to the load **20**. As with the offline UPS topology of Fig. 1, when the AC power source **10** fails, the switch **S**_{**1**} can be opened to allow the load **20** to run off the battery **B.**

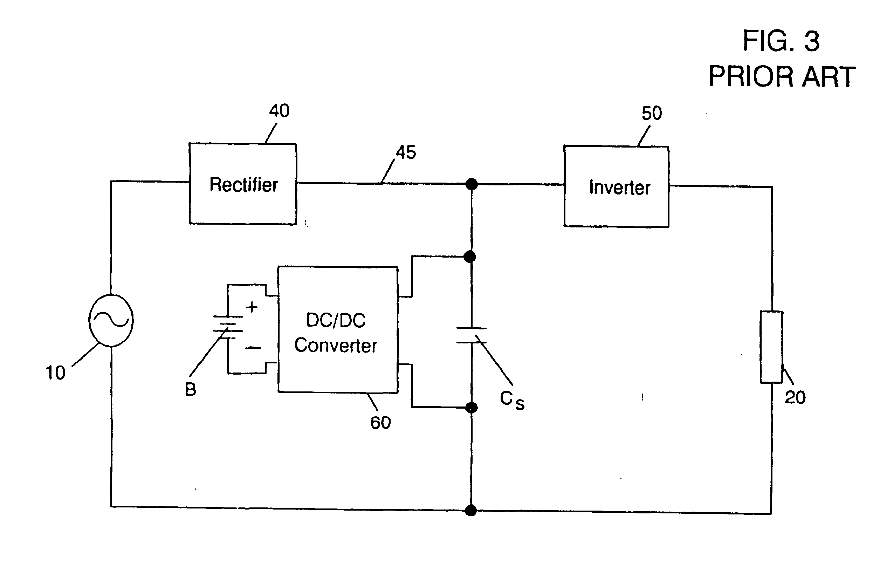

As illustrated in Fig. 3, a typical on-line UPS includes a rectifier **40** that receives an AC voltage from an AC power source **10**, producing a DC voltage across a storage capacitor **C**_{**S**} at an intermediate node **45**. An inverter **50** is connected between the intermediate node **45**, and is operative to produce an AC voltage across a load **20** from the DC voltage. As shown, a battery **B** is connected to the intermediate node **45** via a DC/DC converter **60**, supplying auxiliary power. Alternatively, the DC/DC converter can be eliminated and a high-voltage battery (not shown) connected directly to the intermediate node **45**. An example of a power supply apparatus having an on-line topology is described in United States Patent No. 5,126,585 to Boys.

Each of these topologies may have disadvantages. For example, typical conventional on-line and LIA UPSs for 60 Hz applications use 60 Hz magnetic components (*e.g.*, transformers and inductors) that are sized for such frequencies, and thus may be large, heavy and expensive. LIA UPSs often exhibit step voltage changes that can affect the performance of the load. Conventional off-line, LIA and on-line UPSs often use large storage capacitors, which tend to be bulky and expensive, in order to maintain an acceptable output voltage under heavy loading conditions. Moreover, because conventional UPSs are typically designed to operate in only one of the above-described off-line, LLA or on-line modes, sellers of UPSs may be required to maintain large inventories including several different types of UPSs in order to meet a variety of different customer applications.

### Summary of the Invention

In light of the foregoing, it is an object of the present invention to provide improved uninterruptible power supplies (UPSs).

It is another object of the present invention to provide UPSs that can be operated in a number of different modes.

It is yet another object of the present invention to provide UPSs that can utilize smaller magnetic components and storage capacitors.

These objects, features and advantages may be provided according to the present invention by UPSs according to claim 1 which include a variable-boost rectifier circuit that selectively couples and AC source port to first and second voltage busses, a variable-buck inverter circuit that selectively couples the first and second voltage busses to a load port, and a bidirectional DC source coupling circuit that couples the first and second voltage busses to a DC power source, such as a battery, to provide bidirectional power transfer between the DC power source and the first and second voltage busses. Preferably, the DC source coupling circuit provides inductive bidirectional power transfer between a DC source port at which the DC power source may be connected and the first and second voltage busses such that voltages at the first and second voltage busses and a voltage at the DC source port are maintained in a substantially fixed proportion to one another. The bidirectional DC source coupling circuit can enable the DC source to either receive current when needed (*e.g.*, when the DC source requires charging) or provide current when needed (*e.g.*, when the variable-boost rectifier is unable to provide sufficient current to maintain a nominal voltage at the load port).

According to an aspect of the present invention, power provided from the DC source can be combined with power from the AC source to provide a supplemented mode of operation that may be particularly advantageous for extending battery capacity during brownout conditions. A control circuit may control the rectifier circuit, the inverter circuit and the DC source coupling circuit such that power is transferred to the load port primarily from the AC source until power demand at the load port causes a current at the AC source port to reach a current limit. When the power demand at the load port further increases, increasing power is transferred from the DC source port to the load port. The rectifier and inverter circuits can also be controlled to provide charging of a battery at the DC source port through the DC source coupling circuit, while concurrently maintaining a nominal voltage at the load port.

In particular, according to one embodiment of the present invention, an uninterruptible power supply (UPS) includes an AC source port configured to connect to an AC power source and a load port configured to connect to a load. A rectifier circuit is operative to selectively couple the AC source port to first and second voltage busses through a first inductance. An inverter circuit is operative to selectively couple the load port to the first and second voltage busses through a second inductance. A bidirectional DC source coupling circuit is operative to couple a DC power source to the first and second voltage busses to provide bidirectional power transfer therebetween. Preferably, the DC source coupling circuit provides inductive power transfer between a DC source port (at which a DC power source may be connected) and the first and second voltage busses such that a voltage at the DC source port is maintained in a substantially fixed proportion to first and second DC voltages at respective ones of the first and second voltage busses.

According an embodiment of the present invention, the UPS includes a control circuit operative to generate a rectifier control signal and an inverter control signal responsive to at least a load voltage at the load port. The rectifier circuit is responsive to the rectifier control signal to control coupling of the AC source port to the first and second voltage busses. The inverter circuit is responsive to the inverter control signal to control coupling of the load port to the first and second voltage busses.

According to another embodiment of the present invention, the AC source port includes a phase bus and a neutral bus, and the bidirectional DC source coupling circuit includes a balancer circuit coupled between the first and second voltage busses and operative to selectively couple the first and second voltage busses to the neutral bus through a transformer responsive to a balancer control signal. The control circuit is operative to generate the balancer control signal such that the first and second DC voltages are constrained to have substantially equal magnitudes.

According to yet another aspect of the present invention, the control circuit is responsive to the voltage at the load port to control the rectifier circuit and the inverter circuit such that current at the AC source port varies up to a current limit to maintain the load voltage at the nominal voltage. When the current at the AC source port reaches the current limit, power may be transferred to the load port from both the AC source port and the DC source port to maintain the load terminal at the nominal voltage. The control circuit may further be operative to limit the current at the AC source port.

In one embodiment of the present invention, the rectifier circuit includes a first inductor having a first terminal coupled to the phase bus. A first switch is responsive to a first switch control signal to couple and decouple a second terminal of the first inductor and the first voltage bus, and a second switch is responsive to a second switch control signal to couple and decouple the second terminal of the first inductor and the second voltage bus. The inverter circuit includes a second inductor having a first terminal coupled to the load bus. A third switch is responsive to a third switch control signal to couple and decouple a second terminal of the second inductor and the first voltage bus. A fourth switch is responsive to a fourth switch control circuit to couple and decouple the second terminal of the second inductor and the second voltage bus. The control circuit is operative to generate the first, second third and fourth switch control signals responsive to at least the load voltage at the load port.

According to yet another aspect of the present invention, the bidirectional DC source coupling circuit includes a transformer having first and second inductively coupled windings, the first winding having first and second end taps, and a center tap coupled to the neutral bus. A switching circuit is operative to selectively couple the first end tap of the first winding to the first and second voltage busses. A rectifying circuit couples the second end tap of the first winding to the first and second voltage busses. A bidirectional DC-AC converter circuit is coupled between the second winding and the DC source port. The DC-AC converter circuit preferably includes a full bridge switching circuit that selectively couples first and second terminals of the DC source port to first and second taps of the second winding of the transformer.

In another embodiment of the present invention, a UPS includes an AC source port configured to connect to an AC power source, the AC source port including a phase bus and a neutral bus. A DC source port is configured to connect to a DC power source. A load port is configured to connect to a load, and includes a load bus and the neutral bus. A first switching circuit is operative to selectively couple the phase bus to first and second voltage busses through a first inductance. A second switching circuit is operative to selectively couple the load bus to the first and second voltage busses through a second inductance. A transformer includes first and second inductively coupled windings, the first winding including a center tap coupled to the neutral bus. A third switching circuit is operative to selectively couple the first and second voltage busses to a first end tap of the first winding. A rectifying circuit is operative to rectifyingly couple a second end tap of the first winding to the first and second voltage busses. A DC-AC converter circuit is operative to selectively couple the DC source port to the second winding.

According to method aspects of the present invention, power is selectively transferred power to a load from an AC source and a DC source. The AC source is selectively coupled to first and second voltage busses through a first inductance. The load is selectively coupled to the first and second voltage busses through a second inductance. The DC source is coupled to the first and second voltage busses to provide bidirectional power transfer between the DC source and the first and second voltage busses. Preferably, power is inductively transferred between the DC source and the first and second voltage busses to maintain a voltage at the DC source in a substantially fixed proportion to first and second DC voltages at respective ones of the first and second voltage busses. The first and second voltage busses are preferably selectively coupled to a neutral bus through a transformer such that the first and second DC voltages are constrained to have substantially equal magnitudes. According to one method aspect, the AC source port is selectively coupled to the first and second voltage busses such that current at the AC source varies up to a current limit to maintain the load voltage at the nominal voltage. When the current at the AC source port reaches the current limit and the voltage, power is transferred to the load port from both the AC source and the DC source to maintain the load voltage at the nominal voltage.

Improved UPSs and methods of operation thereof may thereby be provided.

### Brief Description of the Drawings

Figs. 1-3 are schematic diagrams of conventional uninterruptible power supplies (UPSs).
Figs. 4-5 are schematic diagrams illustrating UPSs according to embodiments of the present invention.
Fig. 6 is a schematic diagram illustrating a DC-AC converter circuit according to an embodiment of the present invention.
Fig. 7 illustrates exemplary transistor switching patterns for the embodiments of Figs. 4 and 9.
Figs. 8 and 9A-9C are waveform diagrams illustrating further exemplary operations of the UPS of Fig. 4.
Fig. 10 is a schematic diagram illustrating a UPS according to another embodiment of the present invention.

### Detailed Description of Preferred Embodiments

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

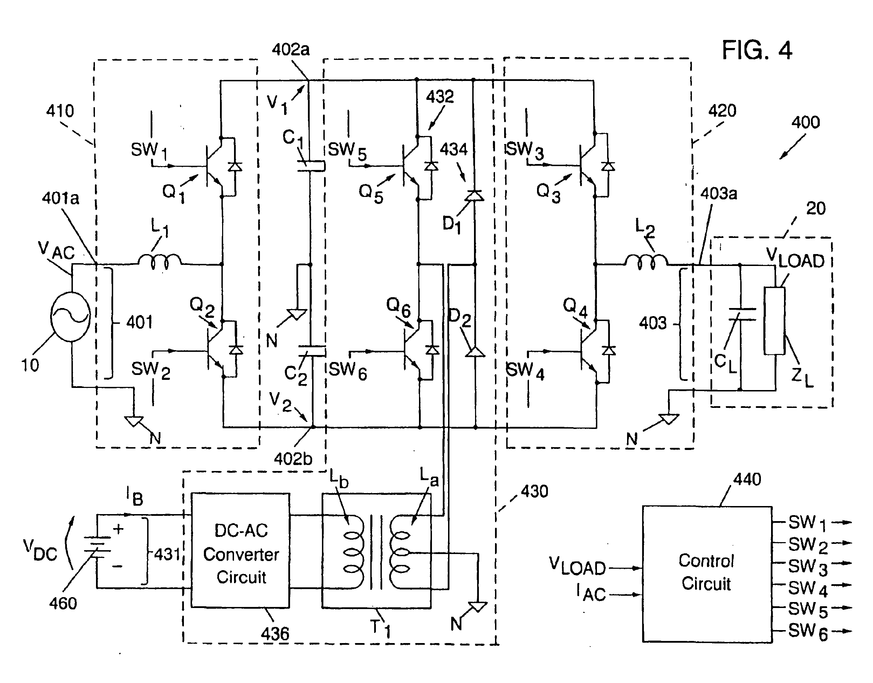

Fig. 4 is a schematic diagram illustrating an uninterruptible power supply (UPS) **400** according to an embodiment of the present invention. The UPS **400** includes a variable-boost rectifier circuit **410** that is configured to connect to an AC power source **10** at an AC source port 401. The variable-boost rectifier circuit **410** is operative to selectively couple a phase bus **401a** of the AC source port **401** to first and second voltage busses voltage busses **402a, 402b** via a first inductor **L**_{**1**}**,** responsive to first and second switch control signals **SW**_{**1**}**, SW**_{**2**} generated by a control circuit **440** applied to first and second switching transistors **Q**_{**1**}**, Q**_{**2**}**.** The first and second voltage busses **402a, 402b** are coupled to a neutral bus **N** by first and second capacitors **C**_{**1**}**, C**_{**2**}**.** The UPS **400** further includes a variable-buck inverter circuit **420** that is operative to selectively couple the first and second voltage busses **402a, 402b** to a load bus **403a** of a load port **403** at which a load **20** is connected (here shown as including capacitance **C**_{**L**} and generalized impedance **Z**_{**L**}) via a second inductor **L**_{**2**}, responsive to third and.fourth switch control signals **SW**_{**3**}**, SW**_{**4**} generated by the control circuit **440** and applied to third and fourth switching transistors **Q**_{**3**}**, Q**_{**4**}**.**

The UPS **400** also includes a DC source coupling circuit **430** that is operative to provide bidirectional power transfer between the first and second voltage busses **402a, 402b** and a DC source port **431**, here shown connected to a battery **460**. The DC source coupling circuit **430** includes a balancer circuit **432** including switching transistors **Q**_{**5**}**, Q**_{**6**} that are responsive to fifth and sixth switch control signals **SW**_{**5**}, **SW**_{**6**} generated by the control circuit **440**. The balancer circuit **432** is operative to control the relative magnitudes of first and second DC voltages **V**_{**1**}**, V**_{**2**} at the first and second voltage busses **402a, 402b** based on the relative duty cycles at which the fifth and sixth transistors **Q**_{**5**}**, Q**_{**6**} are operated, as described in the aforementioned incorporated United States Patent Application Serial Number 09/374,180.

The DC source coupling circuit **430** also includes a transformer **T**_{**1**} having first and second inductively coupled windings **L**_{**a**}**, L**_{**b**}. A center tap of the first winding **L**_{**a**} is connected to the neutral bus N. A first end tap of the first winding **L**_{**a**} is coupled to the switching transistors **Q**_{**5**}**, Q**_{**6**} of the balancer circuit **432**. A second end tap of the first winding **L**_{**a**} is connected to a rectifying circuit **434** including respective diodes **D1, D2** that connect the second end tap to respective ones of the first and second voltage busses **402a, 402b**. A bidirectional DC-AC converter circuit **436** is coupled between the DC source port **431** and the second winding **L**_{**b**}.

It will be appreciated that the embodiment of Fig. 4 represents an exemplary implementation, and that other circuit implementations fall within the scope of the present invention. For example, the switching functions of the transistors **Q**_{**1**}**, Q**_{**2**}**, Q**_{**3**}, **Q**_{**4**}**, Q**_{**5**}**, Q**_{**6**} may be provided by a variety of switching devices including, but not limited to, bipolar transistors, field-effect transistors (FETs), metal oxide semiconductor FETs (MOSFETs), gate turn-on devices (GTOs), and the like. The control circuit **440** may include variety of different components as well, and preferably includes components suitable for controlling the particular type(s) of switching devices used. The functions of the rectifying circuit **434** may be achieved using transistor or other switching devices instead of the diodes **D**_{**1**}**, D**_{**2**}.

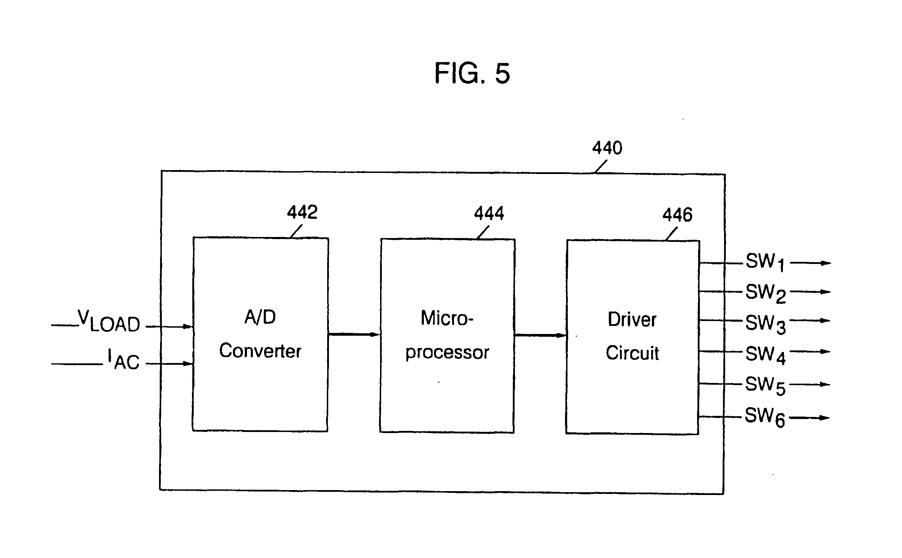

Fig. 5 illustrates an exemplary implementation of the control circuit **440** of Fig. 4. State inputs, including, for example, representations of the voltage **V**_{**LOAD**} at the load port **403** and current **I**_{**AC**} at the AC source port **401**, are received by an analog to digital (A/D) converter **442**. For example, the representation of the AC input current **I**_{**AC**} may be generated using a current sensing device such as a current transformer (CT) (not shown), and the load voltage **V**_{**LOAD**} may be obtained directly, or, more preferably, via buffering circuitry (not shown) that scales the load voltage **V**_{**LOAD**} to a lower level suitable for input into the A/D converter **442**. The A/D converter **442** samples and converts the state inputs into digital form for transmission to a microprocessor **444** or other computing device. The microprocessor **444** implements a control algorithm based on the state inputs, producing digital driver command signals that are applied to a driver circuit **446** that produces the switch control signals **SW**_{**1**}**, SW**_{**2**}**, SW**_{**3**}**, SW**_{**4**}**, SW**_{**5**}**, SW**_{**6**}.

It will be appreciated that the control circuit **440** illustrated in Fig. 5 is provided for illustrative purposes, and that a variety of other implementations may be used within the scope of the present invention. For example, the driver circuit **446** may include any of a variety of components, preferably components suitable for controlling the particular type(s) of switching devices used in the rectifier, inverter and balancer circuits **410, 420, 432**. Functions of the control circuit **440** may be implemented in a number of different ways within the scope of the present invention. For example, functions of the microprocessor **444** may be implemented using discrete logic circuits or programmable logic circuits such as programmable logic devices (PLDs) instead or in conjunction with a microcontroller, microprocessor or similar device. Functions of the A/D converter **442,** the microprocessor **444** and the driver circuit **446** may also be combined in one or more devices, such as an application-specific integrated circuit (ASIC), special purpose microcontroller, or a hybrid microcircuit.

Still referring to Fig. 4, the control circuit **440** preferably is operative to control the inverter circuit **420** such that current can flow from the first and second voltage busses **402a, 402b** to the load **20** or vice versa, thus making the inverter circuit **420** operate as a four-quadrant converter. The control circuit **440** also preferably controls the rectifier circuit **410** such that is has similar four-quadrant operational characteristics, except that different pulse-width modulation (PWM) patterns preferably are applied to the switching transistors **Q**_{**1**}**, Q**_{**2**} of the rectifier circuit **410** than those applied to the switching transistors **Q**_{**3**}**, Q**_{**4**} of the inverter circuit **420.** The PWM patterns employed for the inverter circuit **420** preferably produce a voltage controlled, current limited output voltage, while the PWM patterns employed for the rectifier circuit **410** preferably provide a controlled current to and from the AC power source **10.** The rectifier circuit **410** can be operated such that a current is produced that causes power flow into the UPS **400** from the AC power source **10**, or such that a current is produced that causes power flow into the AC power source **10** from the UPS **400**.

The control circuit **440** preferably controls the balancer circuit **432** in a manner that constrains the magnitudes of first and second DC voltages **V**_{**1**}**, V**_{**2**} on the first and second voltage busses **402a, 402b** to be substantially equal. This is achieved by controlling respective first and second rates (*e.g.*, duty cycles) at which the neutral bus **N** is connected to respective ones of the first and second voltage busses **402a**, **402b** through a portion of the first winding **L**_{**a**}. Specifically, for the embodiment illustrated in Fig. 4, the switching transistors **Q**_{**5**}**, Q**_{**6**} of the balancer circuit **432** are preferably operated at respective complementary 50% duty cycles, such that the first and second DC voltages **V**_{**1**}**, V**_{**2**} are constrained to be substantially equal in magnitude.

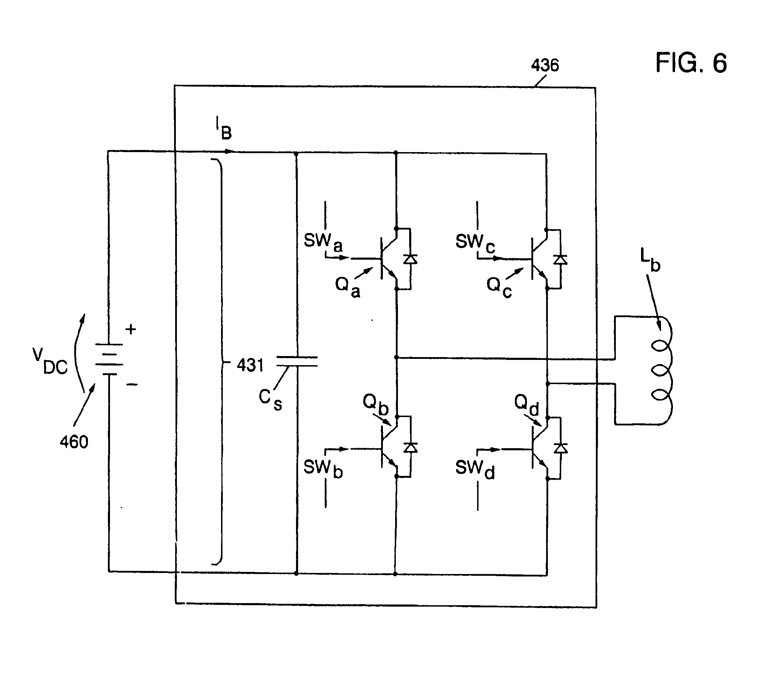

Fig. 6 illustrates an exemplary DC-AC converter circuit **436**. A storage capacitor **C**_{**S**} is connected across the battery **460.** Four switching transistors **Q**_{**a**}**, Q**_{**b**}**, Q**_{**c**}**, Q**_{**d**} are connected in a full bridge configuration between the second transformer winding **L**_{**b**} and the battery **460.** The transistors **Q**_{**a**}**, Q**_{**b**}**, Q**_{**c**}**, Q**_{**d**} are controlled by switch control signals **SW**_{**a**}**, SW**_{**b**}**, SW**_{**c**}**, SW**_{**d**} which may also be generated by the control circuit **440** of Fig. 4. Although the switch control signals **SW**_{**a**}**, SW**_{**b**}**, SW**_{**c**}**, SW**_{**d**} may be generated based on a variety of state inputs, such as a sensed voltage of the battery **460,** as well as sensed voltages and currents elsewhere in the UPS **400** of Fig. 4, the transistors **Q**_{**a**}**, Q**_{**b**}**, Q**_{**c**}**, Q**_{**d**} preferably are operated such that they provide four quadrant conversion, allowing bidirectional power flow between the battery **460** and the second transformer winding **L**_{**b**}**.**

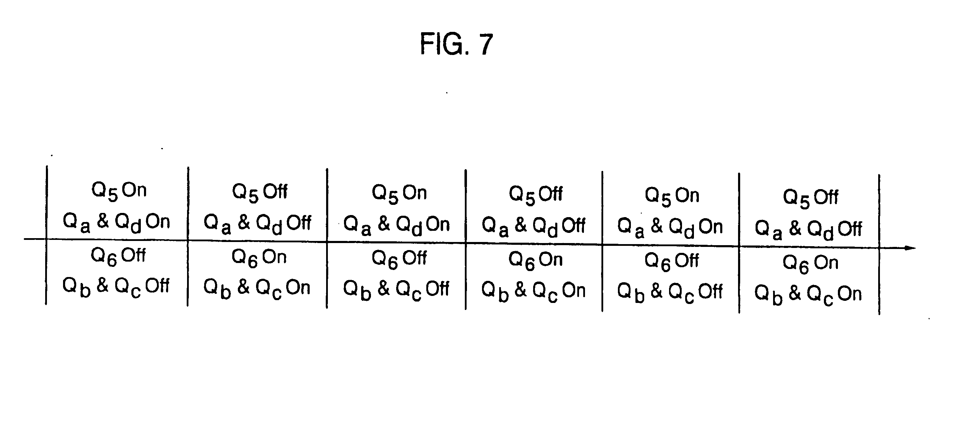

The transistors **Q**_{**a**}**, Q**_{**b**}**, Q**_{**c**}**, Q**_{**d**} are also preferably operated in synchronism with the transistors **Q**_{**5**}**, Q**_{**6**} of the balancer circuit **432.** In particular, as shown in Fig. 7, the transistors **Q**_{**a**}**, Q**_{**b**}**, Q**_{**c**}**, Q**_{**d**}**, Q**_{**5**}**, Q**_{**6**} are preferably operated such that transistors **Q**_{**a**}**, Q**_{**d**}**, Q**_{**5**} are "on" when transistors **Q**_{**b**}**, Q**_{**c**}**, Q**_{**6**} are "off", and vice versa. Proper selection of the turns ratio of the transformer **T**_{**1**} vis a vis the voltage characteristics of the battery **460** and the voltage envelope within which the first and second voltage busses **402a, 402b** are operated can allow the UPS **400** to operate such that power transfer between the battery **460** and the first and second voltage busses **402a, 402b** is effected depending on the charge state of the battery **460** the power demand at the load port **403,** and the voltage **V**_{**AC**} at the AC source port **401,** as described in greater detail below.

It will be appreciated that the embodiment of Fig. 6 represents an exemplary implementation, and that other circuit implementations fall within the scope of the present invention. For example, the switching functions of the transistors **Q**_{**a**}**, Q**_{**b**}**, Q**_{**c**}**, Q**_{**d**} may be provided by any of a number of different switching devices such as those described in relation to Fig. 4, controlled using any of a number of different control circuit implementations, such as ones similar to those described for the switch control circuit **440** of Fig. 5.

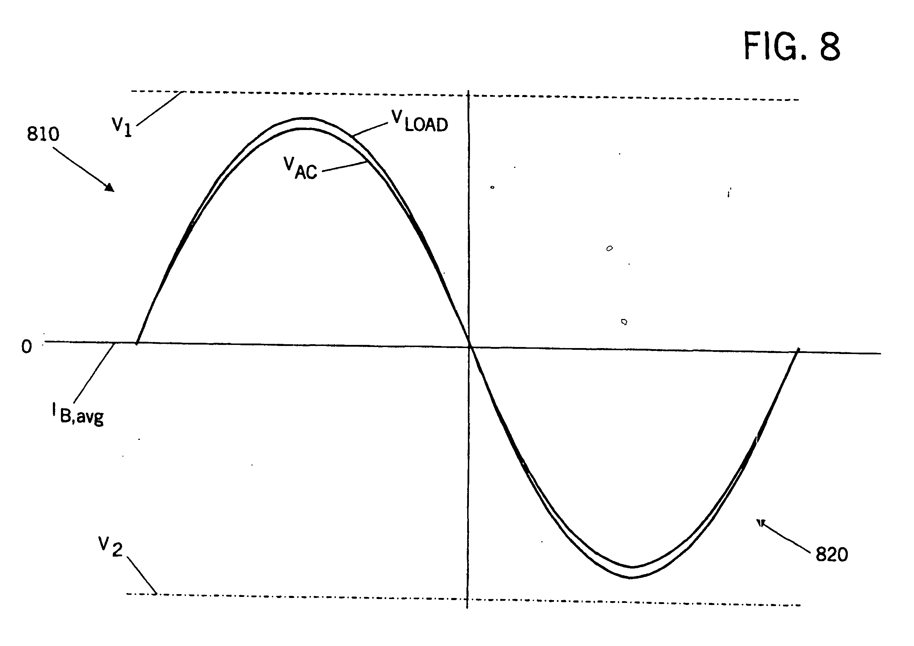

Fig. 8 is a waveform diagram illustrating exemplary operations for the UPS **400** of Fig. 4. For purposes of the discussion of Fig. 8, operation of the UPS **400** of Fig. 4 will be described in terms of the control of the functions of the transistors switches **Q**_{**1**}**, Q**_{**2**}**, Q**_{**3**}**, Q**_{**4**}**, Q**_{**5**}**, Q**_{**6**} of the rectifier and inverter circuits **410, 420**, and more particularly, in terms of the control of "duty cycles" at which the transistors are switched (modulated). As used herein, "duty cycle" generally refers to a percentage of time during a switching cycle period that a switch is in a "closed," *i.e.*, conductive, state. Thus, for example, a switch that is maintained at a 50% duty cycle is intermittently "on" for half of a switching cycle, while a switch approaching a 100% duty cycle, *e.g.*, a 99% duty cycle, is on for nearly all of the switching cycle. It will be understood that, as described herein, the switches discussed may also operate at a 100% duty cycle, *i.e.,* be maintained in an "on" state throughout one or more switching cycles, or at a 0% duty cycle, *i.e.*, be maintained in an "off" state throughout one or more switching cycles.

It will be appreciated that this duty cycle control may be achieved, for example, by application of appropriate control signals to appropriate switching components. For example, in the embodiment of Fig. 4**,** duty cycle control of the switching transistors **Q**_{**1**}**, Q**_{**2**}**, Q**_{**3**}**, Q**_{**4**}**, Q**_{**5**}**, Q**_{**6**} may be achieved by the control circuit **440** applying appropriate base drive signals to the switching transistors **Q**_{**1**}**, Q**_{**2**}**, Q**_{**3**}**, Q**_{**4**}**, Q**_{**5**}**, Q**_{**6**}**.** It will be understood, however, that such duty cycle control may be achieved using any of a number of other switching devices and control signal generating circuits.

Preferably, each of the switching transistors **Q**_{**1**}**, Q**_{**2**}**, Q**_{**3**}**, Q**_{**4**}**, Q**_{**5**}**, Q**_{**6**} of Fig. 4 is operated at a switching frequency that is relatively high with respect to the frequency of the AC input voltage **V**_{**AC**} at which the UPS **400** operates. More preferably, each of the switching transistors **Q**_{**1**}**, Q**_{**2**}**, Q**_{**3**}**, Q**_{**4**}**, Q**_{**5**}**, Q**_{**6**} is operated at a switching frequency that is at least 10 times higher than the frequency of the AC input voltage **V**_{**AC**}; for an AC line frequency of 60Hz, a suitable switching frequency might be 20 kHz. Using relatively high switching frequencies allows the magnetic components (*e.g.*, the inductors **L**_{**1**}**, L**_{**2**}**, L**_{**3**}) to be relatively small in size. Low pass filtering to produce a smoothed load voltage **V**_{**LOAD**} may be achieved by the combination of the output inductor **L**_{**2**} and the capacitance **C**_{**L**}. It will be appreciated that the output capacitance **C**_{**L**} may be provided by the load **20,** as illustrated in Fig. 4, or may be incorporated in the UPS **400**.

Preferably, the three switching transistor pairs including the first and second transistors **Q**_{**1**}**, Q**_{**2**}**,** the third and fourth transistors **Q**_{**3**}**, Q**_{**4**}, and the fifth and sixth switches **Q**_{**5**}**, Q**_{**6**} are operated in a "complementary" fashion. For example, the second transistor **Q**_{**2**} of Fig. 4 is preferably generally constrained to be "off" when the first transistor **Q**_{**1**} is "on," and vice versa. However, it will be appreciated that, generally, practical circuit implementations within the scope of the present invention may be used in which the "complementary" switches are operated in an approximately or substantially complementary fashion. For example, a switch pair may be operated in a "break before make" fashion, such that one of the switches in the pair is turned off slightly before the other switch in the pair is turned on. In other circuit implementations, a slight amount of overlap of "on" periods of switches of a complementary pair may be allowed, *e.g.*, a "make before break" mode of operation. Techniques for providing such "make before break" and "break before make" operations are known to those of skill in the art, and will not be discussed in greater detail herein.

Referring to Fig. 8 in conjunction with Fig. 4., the rectifier circuit **410** and the DC source coupling circuit **430** are generally operated to produce first and second DC voltages **V**_{**1**}**, V**_{**2**} at the first and second voltage busses **402a, 402b** having sufficient magnitudes to enable the inverter circuit **420** to provide a nominal AC output voltage **V**_{**LOAD**} at the load port **403** without discharging the battery **460** at the DC source port **431**. Power preferably is primarily supplied from the AC source port **401**, and the first and second transistors **Q**_{**1**}**, Q**_{**2**} are modulated to maintain the first and second DC voltages **V**_{**1**}**, V**_{**2**}**.** An AC output at the load port **403** is obtained by action of the inverter circuit **410,** which inverts the first and second DC voltages **V**_{**1**}**, V**_{**2**} to produce the load voltage **V**_{**LOAD**}**.** If the first and second DC voltages **V**_{**1**}**, V**_{**2**} are too high, the inverter circuit **420** can also provide a bucking function to provide a nominal voltage at the load port **403** through the action of the third and fourth transistors **Q**_{**3**}**, Q**_{**4**} and the second inductor **L**_{**2**}.

If the AC source voltage **V**_{**AC**} is sufficiently high, the rectifier circuit **410** may not need to provide a boost to maintain the first and second DC voltages **V**_{**1**}**, V**_{**2**}**.** During a first half-cycle **810**, the first and second transistors **Q**_{**1**}**, Q**_{**2**} can operate at substantially complementary duty cycles approaching 100% and 0%, respectively. During a second half-cycle **810**, the first and second transistors **Q**_{**1**}**, Q**_{**2**} can operate at substantially complementary duty cycles approaching 0% and 100%, respectively.

If the AC source voltage **V**_{**AC**} falls, however, the duty cycles of the first and second transistors **Q**_{**1**}**, Q**_{**2**} can be varied to provide an appropriate boost to the first and second DC voltages **V**_{**1**}**, V**_{**2**}**.** During the first half-cycle **810,** the first and second transistors **Q**_{**1**}**, Q**_{**2**} are operated at respective complementary duty cycles sufficiently less than 100% and sufficiently greater than 0%, respectively, to provide an appropriate boost to maintain the first DC voltage **V**_{**1**} and, through the action of the balancer circuit **432,** the second DC voltage **V**_{**2**}. During the second half-cycle **820,** the first and second transistors **Q**_{**1**}**, Q**_{**2**} are operated at respective complementary duty cycles sufficiently greater than 0% and sufficiently less than 100%, respectively, to provide an appropriate boost to maintain the second DC voltage **V**_{**2**} and, through the action of the balancer circuit **432,** the first DC voltage **V**_{**1**}.

Still referring to Figs. 4 and 8, under conditions in which the battery **460** is fully charged and power supplied at the AC source port **401** is sufficient to maintain a nominal voltage at the load port **403**, a substantially zero net power flow occurs between the battery **460** and the first and second voltage busses **402a, 402b**. The magnitude of current induced in the second winding **L**_{**b**} through the first winding **L**_{**a**} by the balancer circuit **432** varies throughout the cycle of the AC source voltage **V**_{**AC**}**,** causing the battery current **I**_{**B**} (shown in Fig. 4) to fluctuate. If the internal electromotive force (EMF) generated by the battery **460** is sufficient such that this current is effectively offset by currents flowing from the battery **460** through DC-AC converter circuit **436**, the average current **I**_{**B.avg**} through the battery **460** is substantially zero, resulting in substantially zero net charge or discharge of the battery **460**.

However, if the battery **460** is less that fully charged, *i.e.*, if the internal EMF of the battery is low such that the battery acts to pull the voltage **V**_{**DC**} at the DC source port lower, a net negative average battery current **I**_{**B.avg**} produced by the DC source coupling circuit **430** acts to maintain the voltage **V**_{**DC**} at the DC source port **431**. *i.e.,* charging current flows into to the battery **460**. Conversely, if power demand at the load port **403** tries to pull the first and second DC voltages **V**_{**1**}**, V**_{**2**} lower, the DC source coupling circuit **430** acts to maintain the first and second voltages **V**_{**1**}**, V**_{**2**} by drawing a positive average battery current **I**_{**B.avg**}**,** transferring power from the battery **460** to the first and second voltage busses **402a, 402b.** Accordingly, the DC source coupling circuit **430** acts to maintain the first and second DC voltages **V**_{**1**}**, V**_{**2**} (which are constrained to be substantially equal in magnitude by the balancer circuit **432**) in a substantially fixed proportion to the voltage **V**_{**DC**} at the DC source port **431,** by effecting appropriate power transfers therebetween.

It will be understood that Fig 8 is provided for illustrative purposes, and that embodiments of the present invention can operate in any of a number of ways than those described with reference to Fig. 8. For example, although Fig. 8 illustrates generating a load voltage **V**_{**LOAD**} having the same frequency as the AC source voltage **V**_{**AC**}**,** the present invention is not limited to such same-frequency operation. Because the UPS **400** uses intermediate DC busses **402a, 402b** to transfer power between the AC source port **401** and the load port **403,** the AC source voltage **V**_{**AC**} and the load voltage **V**_{**LOAD**} can have different frequencies; for example, the AC source voltage **V**_{**AC**} may be 50 Hz, while the generated load voltage **V**_{**LOAD**} may be 60 Hz, or vice versa. The frequency of the load voltage **V**_{**LOAD**} may be changed, for example, by varying the operations of the inverter circuit **420** from the operations described above, *e.g.,* by modifying the rate at which duty cycles of the third and fourth transistors **Q**_{**3**}, **Q**_{**4**} are changed to provide the desired output frequency.

The manner in which boost and/or buck is applied by the rectifier and inverter circuits **410, 420** may also be varied. For example, it may be desirable to elevate the first and second DC voltages **V**_{**1**}**, V**_{**2**} at the first and second voltage busses **402a, 402b** to achieve accelerated battery charging. Under such conditions, the duty cycles of the first, second, third and fourth transistors **Q**_{**1**}**, Q**_{**2**}**, Q**_{**3**}**, Q**_{**4**} may be controlled such that the rectifier circuit **410** boosts the first and second DC voltages **V**_{**1**}**, V**_{**2**}**,** while the inverter circuit **420** bucks the load voltage **V**_{**LOAD**} to maintain a desired nominal load voltage, thus allowing power to flow from the first and second voltage busses **402a**, **402b** to the DC source port **431** while maintaining nominal voltage at the load **20**.

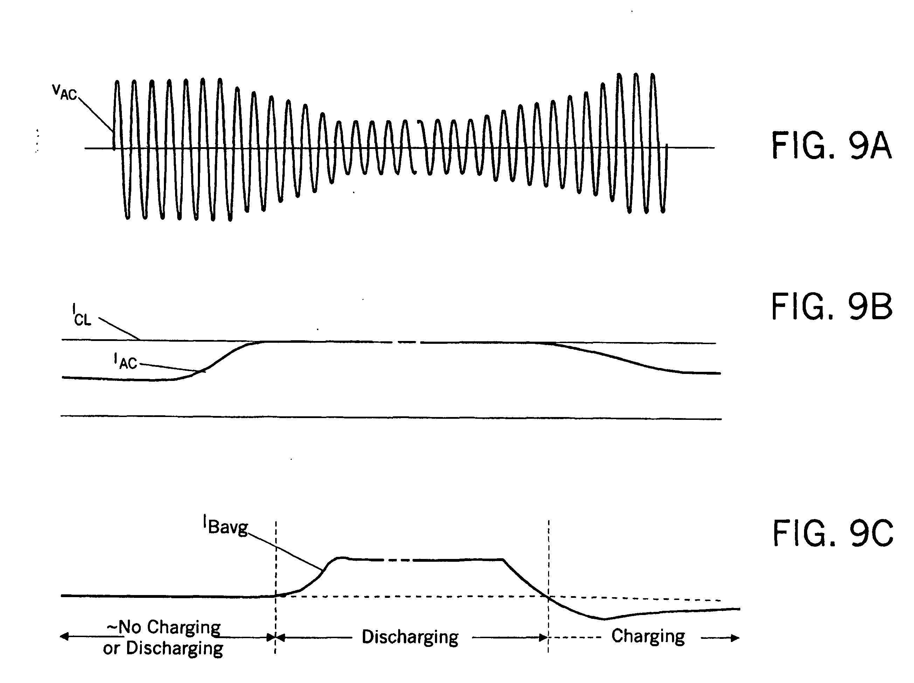

Figs. 9A-9C illustrate exemplary operations of the UPS **400** of Fig. 4 during a "brownout" condition, *i.e.*, when the AC source voltage **V**_{**AC**} falls to a point to where the AC source **10** can no longer meet the power demand at the load port 403. Referring to Figs. 9A-9C in conjunction with Fig. 4, as the AC source voltage **V**_{**AC**} drops, the rectifier circuit **410** attempts to boost the first and second voltages **V**_{**1**}**, V**_{**2**} at the first and second voltage busses **402a, 402b** by drawing increased current **I**_{**AC**} from the AC source **10** (as shown, **I**_{**AC**} represents a current magnitude for an AC current). A current limit **I**_{**CL**} may be determined by characteristics of the AC source **10**. characteristics of components of the rectifier circuit **410** and/or by constraints imposed on operation of the rectifier circuit **410** by the control circuit **440** (*e.g.*, the control circuit **440** may act to limit current responsive to sensing the AC input current **I**_{**AC**}). As the current **I**_{**AC**} approaches the current limit **I**_{**CL**}, increasing power may be drawn from the battery **460,** *i.e.,* a positive battery current **I**_{**B**} may be produced such that both the battery **460** and the AC source **10** are supplying power to the load port **403.** If the AC input voltage **V**_{**AC**} continues to decline, the AC input current **I**_{**AC**} may eventually drop off to zero (not shown), as the AC source **10** may no longer be capable of supplying power, or the UPS **400** may activate an AC switch (not shown) to disconnect the AC source **10** from the rectifier circuit **410**. Under such dropout conditions, power to the load port **403** may be exclusively provided by the battery **460**, such that the UPS **400** changes from a battery-supplemented mode of operation to a battery-powered mode of operation. After restoration of the AC source voltage **V**_{**AC**}, the battery current **I**_{**B**} (shown in Fig. 4) may be reduced, and may even go negative as the UPS **400** attempts to replenish energy drawn from the battery **460** during the brownout period.

The above-described operations may be particularly advantageous in extending battery capacity. Many conventional UPSs go into an offline mode of operation under brownout conditions, *i.e.*, when the voltage of the AC power source (utility) drops below a nominal level, the UPS disconnects the AC power source and supplies the load solely from a battery, which can result in quick discharge of the battery. The aspect of the present invention described with reference to Figs. 9A-9C arises from the realization that a significant amount of power may still be available at the AC power source during a brownout, and that this power can be combined with power drawn from the battery to lessen the rate of discharge of the battery during such low-voltage conditions. Thus, for example, a UPS according to the present invention may be capable of operating through longer brownout conditions than comparable conventional UPSs, and may preserve more battery capacity for continued operation if a brownout is followed by a total loss of the AC power source.

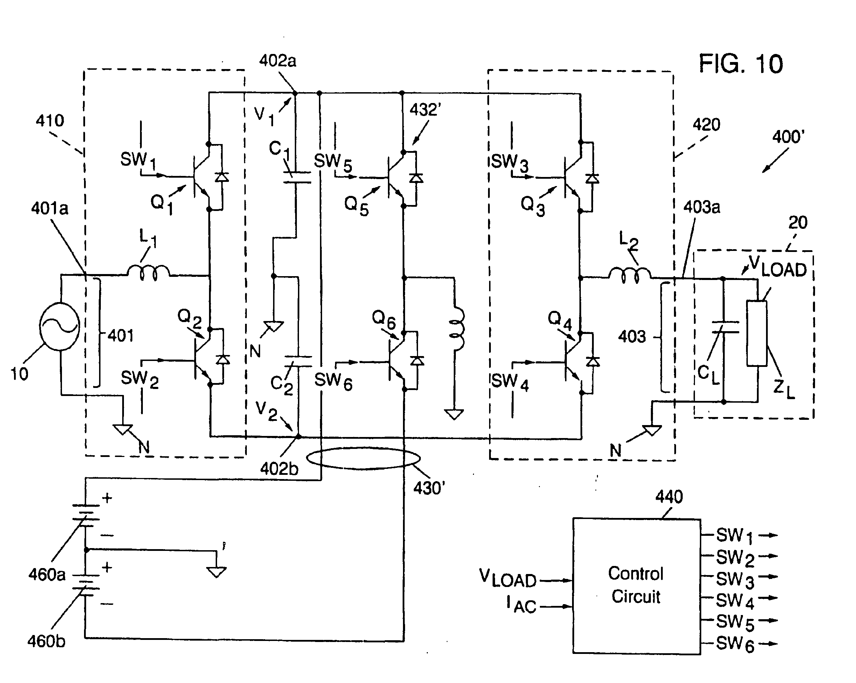

Although the circuit configurations and operations described with reference to Figs. 4-8 and 9A-9C are preferred, other circuit configurations and operations fall within the scope of the present invention. For example, Fig. 10 illustrates a UPS **400'** according to an alternative embodiment of the present invention. Like elements of Figs. 4 and 10 are indicated by like reference numerals, and will not be discussed in detail in light of the preceding discussion of Fig. 4. The UPS **400'** differs from the UPS **400** of Fig. 4 in that the inductive DC source coupling circuit **430** of Fig. 4 is replaced with a direct DC source coupling circuit **430'**, here shown as conductors that directly couple a DC power source, here shown as batteries **460a, 460b**, to the first and second voltage busses **402a**, to provide bidirectional power transfer between the DC power source **460a, 460b** and the first and second voltage busses **402a**, **402b**. The balancer circuit **432** of Fig. 4 is replaced with a balancer circuit **432'** in which the fifth and six transistors **Q**_{**5**}**, Q**_{**6**} selectively couple the first and second voltage busses **402a, 402b** to the neutral bus **N** via a third inductor **L**_{**3**}**.**

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. An uninterruptible power supply (UPS) (400), comprising:
an AC source port (401) configured to connect to an AC power source (10), the AC source port including a phase bus (402a) and a neutral bus (N);
a DC source port (431) configured to connect to a DC power source (460);
a load port (403) configured to connect to a load (20);
a rectifier circuit (410) that selectively couples the AC source port to first and second voltage busses (402a,b) through a first inductance (L1);
an inverter circuit (420) that selectively couples the load port to the first and second voltage busses through a second inductance (L2); and
a bidirectional DC source coupling circuit (430) operative to couple a DC power source at the DC source port to the first and second voltage busses to provide bidirectional power transfer between the DC power source and the first and second voltage busses, the bidirectional DC source coupling circuit including a balancer circuit (432) coupled between the first and second voltage busses and operative to selectively couple the first and second voltage busses to the neutral bus through an inductance (La).

2. A UPS according to Claim 1, wherein the bidirectional DC source coupling circuit (430) inductively couples the DC source port (431) to the first and second voltage busses (402a,b) to provide bidirectional power transfer between the DC source port and the first and second voltage busses such that a voltage at the DC source port is maintained in a substantially fixed proportion to first and second DC voltages at respective ones of the first and second voltage busses.

3. A UPS according to Claim 2, further comprising a control circuit (440) operative to generate a rectifier control signal and an inverter control signal responsive to at least a load voltage at the load port, wherein the rectifier circuit (410) is responsive to the rectifier control signal to control coupling of the AC source port to the first and second voltage busses, and wherein the inverter circuit (420) is responsive to the inverter control signal to control coupling of the load port to the first and second voltage busses.

4. A UPS according to Claim 3:
wherein the bidirectional DC source coupling circuit (430) comprises a transformer (T1);
wherein the balancer circuit (432) is operative to selectively couple the first and second voltage busses to the neutral bus through the transformer responsive to a balancer control signal; and
wherein the control circuit (440) is operative to generate the balancer control signal such that the first and second DC voltages are constrained to have substantially equal magnitudes.

5. A UPS according to Claim 3, wherein the control circuit (440) is responsive to the voltage at the load port to control the rectifier circuit (410) and the inverter circuit (420) such that current at the AC source port varies up to a current limit to maintain the load voltage at the nominal voltage, and such that, when the current at the AC source port reaches the current limit and the voltage, power is transferred to the load port from both the AC source port and the DC source port to maintain the load terminal at the nominal voltage.

6. A UPS according to Claim 5, wherein the control circuit (440) is operative to limit the current at the AC source port.

7. A UPS according to Claim 3:
wherein the load port (403) comprises a load bus (403a) and the neutral bus (N); and
wherein the control circuit (440) is operative to control the rectifier circuit (410) and the inverter circuit (420) such that the phase bus is coupled to respective ones of the first and second voltage busses in a substantially complementary manner and such that the load bus is coupled to respective ones of the first and second voltage busses in a substantially complementary manner.

8. A UPS according to Claim 3:
wherein the load port (403) comprises a load bus (403a) and the neutral bus (N); and
wherein the rectifier circuit (410) comprises:
a first inductor (L1) having a first terminal coupled to the phase bus;
a first switch (Q1) responsive to a first switch control signal to couple and decouple a second terminal of the first inductor and the first voltage bus; and
a second switch (Q2) responsive to a second switch control signal to couple and decouple the second terminal of the first inductor and the second voltage bus;
wherein the inverter circuit (420) comprises:
a second inductor (L2) having a first terminal coupled to the load bus,
a third switch (Q3) responsive to a third switch control signal to couple and decouple a second terminal of the second inductor and the first voltage bus; and
a fourth switch (Q4) responsive to a fourth switch control signal to couple and decouple the second terminal of the second inductor and the second voltage bus; and
wherein the control circuit is operative to generate the first, second, third and fourth switch control signals responsive to at least the load voltage at the load port.

9. A UPS according to Claim 8, wherein the control circuit (440) operates the first and second switches (Q1,Q2) at substantially complementary duty cycles, and wherein the control circuit operates the third and fourth switches (Q3,Q4) at substantially complementary duty cycles.

10. A UPS according to Claim 2:
wherein the load port (403) comprises a load bus and the neutral bus; and
wherein the bidirectional DC source coupling circuit comprises:
a transformer (T1) having first and second inductively coupled windings (La, Lb), the first winding having first and second end taps and a center tap coupled to the neutral bus;
a switching circuit (Q5,Q6) operative to selectively couple the first end tap of the first winding to the first and second voltage busses;
a rectifying circuit (434) coupling the second end tap of the first winding to the first and second voltage busses; and
a bidirectional DC-AC converter circuit (436) coupled between the second winding and the DC source port (431).

11. A UPS according to Claim 10, wherein the switching circuit (Q5,Q6) is operative to constrain the first and second DC voltages to be substantially equal.

12. A UPS according to Claim 10, further comprising a control circuit (440) operative to generate first and second control signals, and wherein the switching circuit comprises:
a first switch (Q5) responsive to the first switch control signal to couple and decouple the first end tap of the first winding of the transformer and the first voltage bus; and
a second switch (Q6) responsive to the second switch control signal to couple and decouple the first end tap of the first winding of the transformer and the second voltage bus.

13. A UPS according to Claim 12, wherein the control circuit (440) constrains the first and second switches to operate at substantially complementary duty cycles of approximately 50%.

14. A UPS according to Claim 10, wherein the DC-AC converter circuit (436) comprises a full bridge switching circuit that selectively couples first and second terminals of the DC source port (431) to first and second taps of the second winding of the transformer (T1).

15. A UPS according to Claim 10, wherein the rectifying circuit (410) comprises one of:
first and second diodes connected between the second end tap of the first winding of the transformer and respective ones of the first and second voltage busses; or
seventh and eighth switches connected between the second end tap of the first winding of the transformer and respective ones of the first and second voltage busses.

16. A UPS according to Claim 1:
further comprising a load port (403) configured to connect to a load, wherein the load port includes a load bus and the neutral bus;
wherein the rectifier circuit (410) comprises a first switching circuit that selectively couples the phase bus to the first and second voltage busses through a first inductance;
wherein the inverter circuit (420) comprises a second switching circuit that selectively couples the load bus to the first and second voltage busses through a second inductance; and
wherein the bidirectional DC source coupling circuit (430) comprises:
a transformer including first and second inductively coupled windings, the first winding including a center tap coupled to the neutral bus;
a third switching circuit that selectively couples the first and second voltage busses to a first end tap of the first winding;
a rectifying circuit that rectifyingly couples a second end tap of the first winding to the first and second voltage busses; and
a DC-AC converter circuit that selectively couples the DC source port to the second winding.

17. A UPS according to Claim 16, further comprising a control circuit (440) operative to control the first and second switching circuits responsive to at least a load voltage at the load port.

18. A UPS according to Claim 17, wherein the control circuit (440) is operative to control the third switching circuit such that first and second DC voltages at respective ones of the first and second voltage busses arc constrained to have substantially equal magnitudes.

19. A UPS according to Claim 17, wherein the control circuit (440) is responsive to the voltage at the load port (403) to control the first and second switching circuits such that current at the phase bus varies up to a current limit to maintain the load voltage at the nominal voltage, and such that, when the current at the phase bus reaches the current limit, power is transferred to the load port from both the AC source port and the DC source port to maintain the load terminal at the nominal voltage.

20. A UPS according to Claim 19, wherein the control circuit (440) is operative to limit the current at the phase bus.

21. A UPS according to Claim 17, wherein the control circuit (440) is operative to control the first and second switching circuits such that the phase bus is coupled to respective ones of the first and second voltage busses in a substantially complementary manner and such that the load bus is coupled to respective ones of the first and second voltage busses in a substantially complementary manner.

22. A UPS according to Claim 17:
wherein the first switching circuit comprises:
a first inductor (L1) having a first terminal coupled to the phase bus;
a first switch (Q1) responsive to a first switch control signal (Sw1) to couple and decouple a second terminal of the first inductor (L1) and the first voltage bus (402a), and
a second switch (Q2) responsive to a second switch control signal (Sw2) to couple and decouple the second terminal of the first inductor and the second voltage bus (402b);
wherein the second switching circuit comprises:
a second inductor (LL) having a first terminal coupled to the load bus (403);
a third switch (Q3) responsive to a third switch control signal (Sw3) to couple and decouple a second terminal of the second inductor and the first voltage bus (402a); and
a fourth switch (Q4) responsive to a fourth Switch control signal (Sw4) to couple and decouple the second terminal of the second inductor and the second voltage bus (402b); and
wherein the control circuit is operative to generate the first, second, third and fourth switch control signals responsive to at least the load voltage at the load port.

23. A UPS according to Claim 22, wherein the control circuit (440) operates the first and second switches at substantially complementary duty cycles, and wherein the control circuit operates the third and fourth switches at substantially complementary duty cycles.

24. A UPS according to Claim 22:
wherein the third switching circuit comprises:
a fifth switch (Q5) responsive to a fifth switch control signal (Sw5) to couple and decouple the first end tap of the first winding of the transformer and the first voltage bus; and
a sixth switch (Q6) responsive to a sixth switch control signal (Sw6) to couple and decouple the first end tap of the first winding of the transformer and the second voltage bus; and
wherein the control circuit is operative to generate the fifth and sixth switch control signals.

25. A UPS according to Claim 24, wherein the control circuit (440) constrains the fifth and sixth switches to operate at substantially complementary duty cycles of approximately 50%.

26. A UPS according to Claim 16, wherein the DC-AC converter circuit (436) comprises a full bridge switching circuit that selectively couples first and second terminals of the DC source port to first and second taps of the second winding of the transformer.

27. A UPS according to Claim 16, wherein the rectifying circuit comprises one of:
first and second diodes connected between the second end tap of the first winding of the transformer (T1) and respective ones of the first and second voltage busses (402a,b); or
first and second switches connected between the second end tap of the first winding of the transformer and respective ones of the first and second voltage busses.

28. A method of selectively transferring power to a load from an AC source and a DC source, the method comprising the steps of:
selectively coupling the AC source to first and second voltage busses through a first inductance;
selectively coupling the load to the first and second voltage busses through a second inductance;
selectively coupling the first and second voltage busses to a neutral bus through a third inductance; and
bidirectionally coupling the DC source to the first and second voltage busses to provide bidirectional power transfer between the DC source and the first and second voltage busses.

29. A method according to Claim 28, wherein said step of bidirectionally coupling comprises the step of inductively coupling the DC source to the first and second voltage busses to provide bidirectional power transfer between the DC source and the first and second voltage busses such that a voltage at the DC source is maintained in a substantially fixed proportion to first and second DC voltages at respective ones of the first and second voltage busses.

30. A method according to Claim 29, wherein selectively coupling the first and second voltage busses to a neutral bus through a third inductance comprises the step of selectively coupling the first and second voltage busses to a neutral bus through a transformer such that the first and second DC voltages are constrained to have substantially equal magnitudes.

31. A method according to Claim 30, further comprising the steps of:
selectively coupling the AC source port to the first and second voltage busses such that current at the AC source varies up to a current limit to maintain the load voltage at the nominal voltage; and
when the current at the AC source port reaches the current limit and the voltage, transferring power to the load port from both the AC source and the DC source to maintain the load voltage at the nominal voltage.

32. A method according to Claim 29:
wherein said step of selectively coupling the AC source comprises the step of selectively coupling a phase bus of the AC source to respective ones of the first and second voltage busses in a substantially complementary manner, and
wherein said step of selectively coupling the load comprises the step of selectively coupling the load to respective ones of the first and second voltage busses in a substantially complementary manner.

33. A method according to Claim 30:
wherein said step of selectively coupling the first and second voltage busses to a neutral bus through a third inductance comprises the steps of:
selectively coupling the neutral bus to the first and second voltage busses through a first portion of a first winding of a transformer having first and second inductively coupled windings; and
rectifyingly coupling the first and second voltage busses to the neutral bus through a second portion of the first winding of the transformer; and
wherein bidirectionally coupling comprises selectively coupling first and second terminals of the DC source to first and second end taps of the second winding of the transformer.

## Patentansprüche

1. Eine unterbrechungsfreie Stromversorgung (USV) (UPS= uninterruptible power supply) (400), die Folgendes aufweist:
einen Wechselstromquellenanschluss (401) konfiguriert zur Verbindung mit einer Wechselstromleistungsquelle (10), wobei der Wechselstromquellenanschluss einen Phasenbus (402a) und einen neutralen Bus (N) aufweist;
einen Gleichstromquellenanschluss (431) konfiguriert zur Verbindung mit einer Gleichstromsleistungsquelle (460);
einen Lastanschluss (403) konfiguriert zur Verbindung mit einer Last (20);
eine Gleichrichterschaltung (410), die den Wechselstromquellenanschluss selektiv mit ersten und zweiten Spannungsbussen (402a, b) durch eine erste Induktivität (L1) koppelt;
eine Inverterschaltung (420), die selektiv den Lastanschluss mit den ersten und zweiten Spannungsbussen durch eine zweite Induktivität (L2) koppelt; und
eine bidirektionale Gleichstromquellenkopplungsschaltung (430), die betriebsmäßig eine Gleichstromleistungsquelle am Gleichstromquellenausgang mit den ersten und zweiten Spannungsbussen koppelt, um eine bidirektionale Leistungsübertragung zwischen der Gleichstromleistungsquelle und den ersten und zweiten Spannungsbussen vorzusehen, wobei die bidirektionale Gleichstromquellenkopplungsschaltung eine Ausgleichsschaltung (432) umfasst, und zwar gekoppelt zwischen den ersten und zweiten Spannungsbussen und betreibbar zur selektiven Kopplung der ersten und zweiten Spannungsbusse mit dem neutralen Bus durch eine Induktivität (La).

2. Eine USV gemäß Anspruch 1, wobei die bidirektionale Gleichstromquellenkopplungsschaltung (430) den Gleichstromquellenanschluss (431) induktiv mit den ersten und zweiten Spannungsbussen (402a, b) koppelt, um eine bidirektionale Leistungsübertragung zwischen dem Gleichstromquellenanschluss und den ersten und zweiten Spannungsbussen, derart vorzusehen, dass eine Spannung an dem Gleichstromquellenanschluss in einer im Wesentlichen festen Proportion zu den ersten und zweiten Gleichspannungen an den entsprechenden ersten und zweiten Spannungsbussen aufrecht erhalten wird.

3. Eine USV nach Anspruch 2, wobei ferner Folgendes vorgesehen ist:
eine Steuerschaltung (440) betreibbar zur Erzeugung eines Gleichrichtersteuersignals und eines Invertersteuersignals, und zwar ansprechend auf mindestens eine Lastspannung an dem Lastanschluss, wobei die Gleichrichterschaltung (410) auf das Gleichrichtersteuersignal anspricht, um die Kopplung des Wechselstromquellenanschlusses mit den ersten und zweiten Spannungsbussen zu steuern, und wobei die Inverterschaltung (420) auf das Invertersteuersignal anspricht, um die Kopplung des Lastanschlusses mit den ersten und zweiten Spannungsbussen zu steuern.

4. Eine USV nach Anspruch 3:
wobei die bidirektionale Gleichstromquellenkopplungsschaltung (430) einen Transformator (T1) aufweist;
wobei die Ausgleichsschaltung (432) im Betrieb die ersten und zweiten Spannungsbusse mit dem neutralen Bus koppelt, und zwar durch den Transformator ansprechend auf ein Ausgleichssteuersignal;
und wobei die Steuerschaltung (440) im Betrieb das Ausgleichssteuersignal derart erzeugt, dass die ersten und zweiten Gleichstromspannungen eingeschränkt sind, um im Wesentlichen die gleichen Größen zu besitzen.

5. Eine USV nach Anspruch 3, wobei die Steuerschaltung (440) auf die Spannung am Lastanschluss anspricht, um die Gleichrichterschaltung (410) und die Inverterschaltung (420) derart zu steuern, dass der Strom am Wechselstromquellenanschluss sich bis zu einer Stromgrenze verändert, um die Lastspannung auf der Nominalspannung zu halten, und ferner derart, dass dann, wenn der Strom an dem Wechselstromquellenanschluss die Stromgrenze und Spannung erreicht, Leistung zu dem Lastanschluss übertragen wird, und zwar sowohl dem Wechselstromquellenanschluss als auch dem Gleichstromquellenanschluss, um den Lastanschluss auf der Nominalspannung zu halten.

6. Eine USV nach Anspruch 5, wobei die Steuerschaltung (440) im Betrieb den Strom an dem Wechselstromquellenanschluss begrenzt.

7. Eine USV nach Anspruch 3, wobei der Lastanschluss (403) einen Lastbus (403a) und den neutralen Bus (N) aufweist;
wobei die Steuerschaltung (440) im Betrieb die Gleichrichterschaltung (410) und die Inverterschaltung (420) derart steuert, dass der Phasenbus mit entsprechenden der ersten und zweiten Spannungsbusse in einer im Wesentlichen komplementären Art und Weise gekoppelt ist, und zwar derart, dass der Lastbus mit einem entsprechenden der ersten und zweiten Spannungsbusse in einer im Wesentlichen komplementären Weise gekoppelt ist.

8. Eine USV nach Anspruch 3, wobei der Lastanschluss (403) einen Lastbus (403a) und den Neutralbus (N) aufweist, und wobei die Gleichrichterschaltung (410) folgendes aufweist:
eine erste Induktivität (L1) mit einem ersten Anschluss gekoppelt mit dem Phasenbus;
einen ersten Schalter (Q1) ansprechend auf ein erstes Schaltersteuersignal, um einen zweiten Anschluss mit der ersten Induktivität und dem ersten Spannungsbus zu koppeln und zu entkoppeln; und
einen zweiten Schalter (Q2) ansprechend auf ein zweites Schaltersteuersignal, um einen zweiten Anschluss der ersten Induktivität und den zweiten Spannungsbus zu koppeln und zu entkoppeln;
wobei die Inverterschaltung (420) folgendes aufweist:
eine zweite Induktivität (L2) mit einem ersten Anschluss gekoppelt mit dem Lastbus;
einen dritten Schalter (Q3) ansprechend auf ein drittes Schaltersteuersignal, um einen zweiten Anschluss der zweiten Induktivität und dem ersten Spannungsbus zu koppeln und zu entkoppeln; und
einen vierten Schalter (Q4) ansprechend auf ein viertes Schaltersteuersignal, um den zweiten Anschluss der zweiten Induktivität und den zweiten Spannungsbus zu koppeln und zu entkoppeln;
wobei die Steuerschaltung im Betrieb erste, zweite, dritte und vierte Schaltersteuersignale erzeugt, und zwar ansprechend auf mindestens die Lastspannung am Lastanschluss.

9. Eine USV nach Anspruch 8, wobei die Steuerschaltung (440) die ersten und zweiten Schalter (Q1, Q2) mit im Wesentlichen komplementären Arbeitszyklen betätigt, wobei die Steuerschaltung die dritten und vierten Schalter (Q3, Q4) mit im Wesentlichen komplementären Arbeitszyklen betreibt.

10. Eine USV nach Anspruch 2, wobei der Lastanschluss (403) einen Lastbus und einen neutralen Bus aufweist; und
wobei die bidirektionale Gleichstromquellenkopplungsschaltung folgendes aufweist:
einen Transformator (T1) mit ersten und zweiten induktiv gekoppelten Wicklungen (La, Lb), wobei die erste Wicklung erste und zweite Endabgriffe und einen Mittelabgriff, gekoppelt mit dem neutralen Bus aufweist;
einen Schaltkreis (Q5, Q6), um betriebsmäßig selektiv den ersten Endabgriff der ersten Wicklung mit den ersten und zweiten Spannungsbussen zu koppeln;
eine Gleichrichterschaltung (434) zum Koppeln des zweiten Endabgriffs der ersten Wicklung mit den ersten und zweiten Spannungsbussen; und
eine bidirektionale Gleichstrom- /Wechselstromumwandlerschaltung (436) gekoppelt zwischen der zweiten Wicklung und dem Gleichstromquellenanschluss (431).

11. Eine USV nach Anspruch 10, wobei die Schaltkreise (Q5, Q6) im Betrieb, die ersten und zweiten Gleichspannungen begrenzen oder einschränken, und zwar derart, dass diese im Wesentlichen gleich sind.

12. Eine USV nach Anspruch 10, wobei ferner eine Steuerschaltung (440) vorgesehen ist, die im Betrieb die ersten und zweiten Steuersignale erzeugt, und wobei der Schaltkreis folgendes aufweist:
einen ersten Schalter (Q5) ansprechend auf das erste Schaltersteuersignal, um den ersten Endabgriff der ersten Wicklung des Transformators und den ersten Spannungsbus zu koppeln und zu entkoppeln;
einen zweiten Schalter (Q6) ansprechend auf das zweite Schaltersteuersignal, um den ersten Endabgriff der ersten Wicklung des Transformators und den zweiten Spannungsbus zu koppeln und zu entkoppeln.

13. Eine USV nach Anspruch 12, wobei die Steuerschaltung (440) die ersten und zweiten Schalter einschränkt oder begrenzt, und zwar zum Betrieb mit im Wesentlichen komplementären Arbeitszyklen von annähernd 50%.

14. Eine USV nach Anspruch 10, wobei die Gleichstrom- /Wechselstromumwandlerschaltung (436) einen Vollbrückenschaltkreis aufweist, der selektiv die ersten und zweiten Anschlüsse des Gleichstromquellenanschlusses (431) mit den ersten und zweiten Abgriffen der zweiten Wicklung des Transformators (T1) koppelt.

15. Eine USV nach Anspruch 10, wobei die Gleichrichterschaltung (410) eines von folgendem aufweist:
erste und zweite Dioden geschaltet zwischen dem zweiten Endabgriff der ersten Wicklung des Transformators und entsprechenden Bussen der ersten und zweiten Spannungsbusse; oder
siebte und achte Schalter geschaltet zwischen dem zweiten Endabgriff der ersten Wicklung des Transformators und entsprechenden Bussen der ersten und zweiten Spannungsbusse.

16. Eine USV nach Anspruch 1, wobei ferner ein Lastanschluss (403) konfiguriert ist zur Anschaltung einer Last, wobei der Lastanschluss einen Lastbus und den Neutralbus aufweist;
wobei die Gleichrichterschaltung (410) einen ersten Schaltkreis aufweist, der selektiv den Phasenbus an die ersten und zweiten Spannungsbusse über eine erste Induktivität koppelt;
wobei die Inverterschaltung (420) einen zweiten Schaltkreis aufweist, der selektiv den Lastbus mit den ersten und zweiten Spannungsbussen über eine zweite Induktivität koppelt; und
wobei der bidirektionale Gleichstromquellenkopplungsschaltkreis (430) folgendes aufweist:
einen Transformator mit ersten und zweiten induktiv gekoppelten Wicklungen, wobei die erste Wicklung einen mit dem neutralen Bus gekoppelten Mittelabgriff aufweist;
einen dritten Schaltkreis, der selektiv die ersten und zweiten Spannungsbusse mit einem ersten Endabgriff der ersten Wicklung koppelt;
eine Gleichrichterschaltung, die in gleichrichtender Weise den zweiten Endabgriff der ersten Wicklung mit den ersten und zweiten Spannungsbussen koppelt; und
eine Gleichstrom- / Wechselstromumwandlerschaltung, die selektiv den Gleichstromquellenanschluss mit der zweiten Wicklung koppelt.

17. Eine USV nach Anspruch 16, wobei ferner die Steuerschaltung (440) vorgesehen ist, die im Betrieb die ersten und zweiten Schaltkreise steuert, und zwar ansprechend auf mindestens eine Lastspannung an dem Lastanschluss.

18. Eine USV nach Anspruch 17, wobei die Steuerschaltung (440) im Betrieb den dritten Schaltkreis derart steuert, dass die ersten und zweiten Gleichspannungen an entsprechenden der ersten und zweiten Spannungsbusse eingeschränkt sind, um im Wesentlichen gleiche Größen zu besitzen.

19. Eine USV nach Anspruch 17, wobei die Steuerschaltung (440) auf die Spannung an dem Lastanschluss (403) anspricht, um die ersten und zweiten Schaltkreise derart zu steuern, dass sich der Strom am Phasenbus hinauf bis zu einer Stromgrenze ändert, um die Lastspannung auf der Nominalspannung zu halten, und zwar derart, dass dann, wenn der Strom am Phasenbus die Stromgrenze erreicht, Leistung zu dem Lastanschluss von sowohl dem Wechselstromquellenanschluss als auch dem Gleichstromquellenanschluss übertragen wird, um den Lastanschluss auf der Nominalspannung zu halten.

20. Eine USV nach Anspruch 19, wobei die Steuerschaltung (440) im Betrieb den Strom auf dem Phasenbus begrenzt.

21. Eine USV nach Anspruch 17, wobei die Steuerschaltung (440) im Betrieb die ersten und zweiten Schaltkreise derart steuert, dass der Phasenbus mit entsprechenden der ersten und zweiten Spannungsbusse gekoppelt ist, und zwar in einer im Wesentlichen komplementären Art und Weise und ferner derart, dass der Lastbus mit entsprechenden der ersten und zweiten Spannungsbusse in einer im Wesentlichen komplementären Art und Weise gekoppelt.

22. Eine USV nach Anspruch 17, wobei der erste Schaltkreis folgendes aufweist:
eine erste Induktivität (L1) der einen ersten Anschluss aufweist, der mit dem Phasenbus gekoppelt ist,
einen ersten Schalter (Q1) ansprechend auf ein erstes Schaltersteuersignal (SW1) zum Koppeln und Entkoppeln des zweiten Anschlusses der ersten Induktivität (L1) und des ersten Spannungsbusses (402a), und
einen zweiten Schalter (Q2) ansprechend auf ein erstes Schaltersteuersignal (SW2) zum Koppeln und Entkoppeln des zweiten Anschlusses der ersten Induktivität und des zweiten Spannungsbusses (402b), und
wobei der zweite Schaltkreis folgendes aufweist:
eine zweite Induktivität (L2) mit einem ersten Anschluss gekoppelt mit dem Lastbus (403a);
einen dritten Schalter (Q3) ansprechend auf ein drittes Schaltersteuersignal (SW3) zum Koppeln und Entkoppeln eines zweiten Anschlusses der zweiten Induktivität und des ersten Spannungsbusses (402a); und
einen vierten Schalter (Q4) ansprechend auf ein viertes Schaltersteuersignal (SW4) zum Koppeln und Entkoppeln des zweiten Anschlusses der zweiten Induktivität und des zweiten Spannungsbusses (402b); und
wobei die Steuerschaltung im Betrieb erste, zweite, dritte und vierte Schaltersteuersignale erzeugt, und zwar ansprechend auf mindestens die Lastspannung am Lastanschluss.

23. Eine USV nach Anspruch 22, wobei die Steuerschaltung (440) die ersten und zweiten Schalter betätigt, und zwar mit im Wesentlichen komplementären Arbeitszyklen, wobei die Steuerschaltung die dritten und vierten Schalter mit im Wesentlichen komplementären Arbeitszyklen betreibt.

24. Eine USV nach Anspruch 22, wobei der dritte Schaltkreis folgendes aufweist:
einen fünften Schalter (Q5) ansprechend auf ein fünftes Schaltersteuersignal (SW5) zum Koppel und Entkoppeln eines ersten Endabgriffs der ersten Wicklung des Transformators und dem ersten Spannungsbus; und
einen sechsten Schalter (Q6) ansprechend auf ein sechstes Schaltersteuersignal (SW6) zum Koppel und Entkoppeln des ersten Endabgriffs der ersten Wicklung des Transformators und des zweiten Spannungsbusses; und
wobei der Steuerkreis bzw. die Steuerschaltung im Betrieb die fünften und sechsten Schaltersteuersignale erzeugt.

25. Eine USV nach Anspruch 24, wobei die Steuerschaltung (440) die fünften und sechsten Schalter einschränkt oder beschränkt, um im Wesentlichen bei komplementären Arbeitszyklen von annähernd 50% zu arbeiten.

26. Eine USV nach Anspruch 16, wobei die Gleichstrom- /Wechselstromumwandlerschaltung (436) einen Vollbrückenschaltkreis aufweist, der selektiv die ersten und zweiten Anschlüsse des Gleichstromquellenanschlusses mit den ersten und zweiten Abgriffen der zweiten Wicklung des Transformators koppelt.

27. Eine USV nach Anspruch 16, wobei die Gleichrichterschaltung eines der folgenden Elemente aufweist:
erste und zweite Dioden geschaltet zwischen dem zweiten Endabgriff und der ersten Wicklung des Transformators (T1) und entsprechenden der ersten und zweiten Spannungsbusse (402a, b); oder
erste und zweite Schalter geschaltet zwischen dem zweiten Endabgriff der ersten Wicklung des Transformators und entsprechenden ersten und zweiten Spannungsbussen.

28. Verfahren zum selektiven Übertragung von Leistung zu einer Last von einer Wechselstromquelle und einer Gleichstromquelle, wobei das Verfahren die folgenden Schritte aufweist:
selektives Koppeln der Gleichstromquelle mit den ersten und zweiten Spannungsbussen durch eine erste Induktivität;
selektives Koppeln der Last mit den ersten und zweiten Spannungsbusse durch eine zweite Induktivität;
selektives Koppeln der ersten und zweiten Spannungsbusse mit einem neutralem Bus, und zwar durch eine dritte Induktivität; und
bidirektionales Koppeln der Gleichstromquelle mit den ersten und zweiten Spannungsbussen zum Liefern eines bidirektionalen Leistungstransfers zwischen der Gleichstromquelle und den ersten und zweiten Spannungsbussen.

29. Verfahren nach Anspruch 28, wobei der Schritt des bidirektionalen Koppelns den Schritt des induktiven Koppelns der Gleichstromquelle mit den ersten und zweiten Spannungsbussen aufweist, um einen bidirektionalen Leistungstransfer zwischen der Gleichstromquelle und den ersten und zweiten Spannungsbussen derart vorzusehen, dass eine Spannung an der Gleichstromquelle in einer im Wesentlichen festen Proportion zu ersten und zweiten Gleichstromspannungen an entsprechenden der ersten und zweiten Spannungsbusse aufrecht erhalten wird.

30. Ein Verfahren nach Anspruch 29, wobei selektives Koppeln der ersten und zweiten Spannungsbusse an einen Neutralbus über eine dritte Induktivität den Schritt des selektiven Koppelns der ersten und zweiten Spannungsbusse an einen Neutralbus über einen Transformator derart aufweist, dass die ersten und zweiten Gleichstromspannungen eingeschränkt sind, um im Wesentlichen gleiche Größen zu haben.

31. Ein Verfahren nach Anspruch 30, wobei ferner die folgenden Schritte vorgesehen sind:
selektives Koppeln des Wechselstromquellenanschlusses mit den ersten und zweiten Spannungsbussen, derart, dass der Strom an der Wechselstromquelle sich bis zu einer Stromgrenze verändert, um die Lastspannung auf der Nominalspannung zu halten; und
wobei der Strom an der Wechselstromquelle die Stromgrenze und die Spannung erreicht, wobei Leistung zum Lastanschluss von sowohl der Gleichstromquelle als auch der Wechselstromquelle übertragen wird, um die Lastspannung auf der Nominalspannung zu halten.

32. Verfahren nach Anspruch 29:
wobei der Schritt des selektiven Koppelns der Wechselstromquelle den Schritt des selektiven Koppelns eines Phasenbusses der Wechselstromquelle mit entsprechenden der ersten und zweiten Spannungsbusse in einer im Wesentlichen komplementären Art und Weise aufweist; und
wobei der Schritt des selektiven Koppelns der Last den Schritt des selektiven Koppelns der Last mit entsprechenden der ersten und zweiten Spannungsbusse aufweist, und zwar in einer im Wesentlichen komplementären Art und Weise.

33. Verfahren nach Anspruch 30:
wobei der Schritt des selektiven Koppelns der ersten und zweiten Spannungsbusse an einen Neutralbus durch eine dritte Induktivität die folgenden Schritte aufweist:
Selektives Koppeln des Neutralbusses an die ersten und zweiten Spannungsbusse über einen ersten Teil einer ersten Wicklung eines Transformators mit ersten und zweiten induktiv gekoppelten Wicklungen; und
in gleichrichtender Weise Koppeln der ersten und zweiten Spannungsbusse an den Neutralbus über einen zweiten Teil der ersten Wicklung des Transformators; und
wobei das bidirektionale Koppeln das selektive Koppeln erster und zweiter Anschlüsse der Gleichstromquelle mit ersten und zweiten Endabgriffen der zweiten Wicklung des Transformators aufweist.

## Revendications

1. Alimentation de courant sans coupure (UPS) (400), comprenant :
un port de source de courant alternatif (401) configuré pour connecter une source d'alimentation en courant alternatif (10), le port de source de courant alternatif comprenant un bus de phase (402a) et un bus du neutre (N),
un port de source de courant continu (431) configuré pour connecter à une source d'alimentation en courant continu (460),
un port de charge (403) configuré pour connecter à une charge (20),
un circuit redresseur (410) qui couple sélectivement le port de source de courant alternatif aux premier et second bus (402a, b) de tension par l'intermédiaire d'une première bobine d'inductance (L1),
un circuit d'onduleur (420) qui couple sélectivement le port de charge aux premier et second bus de tension par l'intermédiaire d'une seconde bobine d'inductance (L2), et
un circuit de couplage de source de courant continu bidirectionnel (430) agissant pour coupler une source d'alimentation en courant continu au niveau du port de source de courant continu aux premier et second bus de tension afin de permettre un transfert d'alimentation bidirectionnel entre la source d'alimentation en courant continu et les premier et second bus de tension, le circuit de couplage de source de courant continu bidirectionnel comprenant un circuit d'équilibrage (432) couplé entre les premier et second bus de tension et agissant pour coupler sélectivement les premier et second bus de tension au bus du neutre par l'intermédiaire d'une bobine d'inductance (La).

2. Alimentation UPS selon la revendication 1, dans laquelle le circuit de couplage de source de courant continu bidirectionnel (430) couple de manière inductive le port de source de courant continu (431) aux premier et second bus de tension (402a, b) afin de permettre un transfert d'alimentation bidirectionnel entre le port de source de courant continu et les premier et second bus de tension de sorte qu'une tension au niveau du port de source de courant continu est maintenue dans une proportion sensiblement fixe par rapport aux première et seconde tensions de courant continu au niveau des bus respectifs parmi les premier et second bus de tension.

3. Alimentation UPS selon la revendication 2, comprenant en outre un circuit de commande (440) agissant pour générer un signal de commande de redresseur et un signal de commande d'onduleur en réponse à au moins une tension de la charge au niveau du port de charge, dans laquelle le circuit redresseur (410) répond au signal de commande de redresseur pour commander le couplage du port de source de courant alternatif aux premier et second bus de tension, et dans laquelle le circuit d'onduleur (420) répond au signal de commande d'onduleur pour commander le couplage du port de charge aux premier et second bus de tension.

4. Alimentation UPS selon la revendication 3 :
dans laquelle le circuit de couplage de source de courant continu bidirectionnel (430) comprend un transformateur (T1),
dans lequel lé circuit d'équilibrage (432) agit pour coupler sélectivement les premier et second bus de tension au bus du neutre par l'intermédiaire du transformateur en réponse à un signal de commande d'équilibrage, et
dans laquelle le circuit de commande (440) agit pour générer le signal de commande d'équilibrage de sorte que les première et seconde tensions de courant continu sont contraintes à avoir des valeurs sensiblement égales.

5. Alimentation UPS selon la revendication 3, dans laquelle le circuit de commande (440) répond à la tension au niveau du port de charge pour commander le circuit redresseur (410) et le circuit d'onduleur (420) de sorte que le courant au niveau du port de source de courant alternatif soit modifié jusqu'à une limite de courant afin de maintenir la tension de la charge à la tension nominale, et de sorte que, lorsque le courant au niveau du port de source de courant alternatif atteint la limite de courant et la tension, l'alimentation est transférée au port de charge depuis à la fois le port de source de courant alternatif et le port de source de courant continu afin de maintenir la borne de charge à la tension nominale.

6. Alimentation UPS selon la revendication 5, dans laquelle le circuit de commande (440) agit pour limiter le courant au niveau du port de source de courant alternatif.

7. Alimentation UPS selon la revendication 3 :
dans laquelle le port de charge (403) comprend un bus de charge (403c) et le bus du neutre (N), et
dans laquelle le circuit de commande (440) agit pour commander le circuit redresseur (410) et le circuit d'onduleur (420) de sorte que le bus de phase soit couplé aux bus respectifs parmi les premier et second bus de tension d'une manière sensiblement complémentaire et de sorte que le bus de charge soit couplé aux bus respectifs parmi les premier et second bus de tension d'une manière sensiblement complémentaire.

8. Alimentation UPS selon la revendication 3 :
dans laquelle le port de charge (403) comprend un bus de charge (403a) et le bus du neutre (N), et
dans laquelle le circuit redresseur (410) comprend :
une première bobine d'inductance (L1) comportant une première borne couplée au bus de phase,
un premier commutateur (Q1) répondant à un premier signal de commande de commutateur pour coupler et découpler une seconde borne de la première bobine d'inductance et le premier bus de tension, et
un second commutateur (Q2) répondant à un second signal de commande de commutateur pour coupler et découpler la seconde borne de la première bobine d'inductance et le second bus de tension,
dans laquelle le circuit d'onduleur (420) comprend :
une seconde bobine d'inductance (L2) ayant une première borne couplée au bus de charge,
un troisième commutateur (Q3) répondant à un troisième signal de commande de commutateur pour coupler et découpler une seconde borne de la seconde bobine d'inductance et le premier bus de tension, et
un quatrième commutateur (Q4) répondant à un quatrième signal de commande de commutateur pour coupler et découpler la seconde borne de la seconde bobine d'inductance et le second bus de tension, et
dans laquelle le circuit de commande agit pour générer les premier, second, troisième et quatrième signaux de commande de commutateur en réponse à au moins la tension de la charge au niveau du port de charge.

9. Alimentation UPS selon la revendication 8, dans laquelle le circuit de commande (440) actionne les premier et second commutateurs (Q1, Q2) à des rapports cycliques pratiquement complémentaires, et dans laquelle le circuit de commande actionne les troisième et quatrième commutateurs (Q3, Q4) à des rapports cycliques sensiblement complémentaires.

10. Alimentation UPS selon la revendication 2 :
dans laquelle le port de charge (403) comprend un bus de charge et le bus du neutre, et
dans laquelle le circuit de couplage de source de courant continu bidirectionnel comprend :
un transformateur (T1) comportant des premier et second enroulements (La, Lb) couplés de manière inductive, le premier enroulement comportant des première et seconde prises d'extrémité et une prise centrale couplée au bus du neutre,
un circuit de commutation (Q5, Q6) agissant pour coupler sélectivement la première prise d'extrémité du premier enroulement aux premier et second bus de tension,
un circuit redresseur (434) couplant la seconde prise d'extrémité du premier enroulement aux premier et second bus de tension, et
un circuit de convertisseur de courant continu en courant alternatif bidirectionnel (436) couplé entre le second enroulement et le port de source de courant continu (431).

11. Alimentation UPS selon la revendication 10, dans laquelle le circuit de commutation (Q5, Q6) agit pour contraindre les première et seconde tensions de courant continu à être sensiblement égales.

12. Alimentation UPS selon la revendication 10, comprenant en outre un circuit de commande (440) agissant pour générer des premier et second signaux de commande, et dans laquelle le circuit de commutation comprend :
un premier commutateur (Q5) répondant au premier signal de commande de commutateur pour coupler et découpler la première prise d'extrémité du premier enroulement du transformateur et le premier bus de tension, et
un second commutateur (Q6) répondant au second signal de commande de commutateur pour coupler et découpler la première prise d'extrémité du premier enroulement du transformateur et le second bus de tension.

13. Alimentation UPS selon la revendication 12, dans laquelle le circuit de commande (440) contraint les premier et second commutateurs à fonctionner à des rapports cycliques sensiblement complémentaires d'approximativement 50 %.

14. Alimentation UPS selon la revendication 10, dans laquelle le circuit de convertisseur de courant continu en courant alternatif (436) comprend un circuit de commutation à pont à deux alternances qui couple sélectivement les première et seconde bornes du port de source de courant continu (431) aux première et seconde prises du second enroulement du transformateur (T1).

15. Alimentation UPS selon la revendication 10, dans laquelle le circuit de rectification (410) comprend l'un de :
des première et seconde diodes connectées entre la seconde prise d'extrémité du premier enroulement du transformateur et les bus respectifs parmi les premier et second bus de tension, ou
des septième et huitième commutateurs connectés entre la seconde prise d'extrémité du premier enroulement du transformateur et les bus respectifs parmi les premier et second bus de tension.

16. Alimentation UPS selon la revendication 1 :
comprenant en outre un port de charge (403) configuré pour connecter une charge, dans laquelle le port de charge comprend un bus de charge et le bus du neutre,
dans laquelle le circuit redresseur (410) comprend un premier circuit de commutation qui couple sélectivement le bus de phase aux premier et second bus de tension par l'intermédiaire d'une première bobine d'inductance,
dans laquelle le circuit d'onduleur (420) comprend un second circuit de commutation qui couple sélectivement le bus de charge aux premier et second bus de tension par l'intermédiaire d'une seconde bobine d'inductance, et
dans laquelle le circuit de couplage de source de courant continu bidirectionnel (430) comprend :
un transformateur comprenant les premier et second enroulements couplés de manière inductive, le premier enroulement comprenant une prise centrale couplée au bus du neutre,
un troisième circuit de commutation qui couple sélectivement les premier et second bus de tension à une première prise d'extrémité du premier enroulement,
un circuit redresseur qui couple selon un mode de redressement une seconde prise d'extrémité du premier enroulement aux premier et second bus de tension, et
un circuit de convertisseur de courant continu en courant alternatif qui couple sélectivement le port de source de courant continu au second enroulement.

17. Alimentation UPS selon la revendication 16, comprenant en outre un circuit de commande (440) agissant pour commander les premier et second circuits de commutation en réponse à au moins une tension de la charge au niveau du port de charge.

18. Alimentation UPS selon la revendication 17, dans laquelle le circuit de commande (440) agit pour commander le troisième circuit de commutation de sorte que les première et seconde tensions de courant continu au niveau des bus respectifs parmi les premier et second bus de tension soient contraintes à avoir des valeurs sensiblement égales.

19. Alimentation UPS selon la revendication 17, dans laquelle le circuit de commande (440) répond à la tension au niveau du port de charge (403) pour commander les premier et second circuits de commutation de sorte que le courant au niveau du bus de phase soit modifié jusqu'à une limite de courant afin de maintenir la tension de la charge à la tension nominale, et de sorte que, lorsque le courant au niveau du bus de phase atteint la limite de courant, l'alimentation soit transférée au port de charge depuis à la fois le port de source de courant alternatif et le port de source de courant continu afin de maintenir la borne de charge à la tension nominale.

20. Alimentation UPS selon la revendication 19, dans laquelle le circuit de commande (440) agit pour limiter le courant au niveau du bus de phase.

21. Alimentation UPS selon la revendication 17, dans laquelle le circuit de commande (440) agit pour commander les premier et second circuits de commutation de sorte que le bus de phase soit couplé aux bus respectifs parmi les premier et second bus de tension d'une manière sensiblement complémentaire et de sorte que le bus de charge soit couplé aux bus respectifs parmi les premier et second bus de tension d'une manière sensiblement complémentaire.

22. Alimentation UPS selon la revendication 17,
dans laquelle le premier circuit de commutation comprend :
une première bobine d'inductance (L1) comportant une première borne couplée au bus de phase,
un premier commutateur (Q1) répondant à un premier signal de commande de commutateur (SW1) pour coupler et découpler une seconde borne de la première bobine d'inductance (L1) et le premier bus de tension (402a), et
un second commutateur (Q2) répondant à un second signal de commande de commutateur (SW2) pour coupler et découpler la seconde borne de la première bobine d'inductance et le second bus de tension (402b),
où le second circuit de commutation comprend :
une seconde bobine d'inductance (L2) ayant une première borne couplée au bus de charge (403a),
un troisième commutateur (Q3) répondant à un troisième signal de commande de commutateur (SW3) pour coupler et découpler une seconde borne de la seconde bobine d'inductance et le premier bus de tension (402a), et
un quatrième commutateur (Q4) répondant à un quatrième signal de commande de commutateur (SW4) pour coupler et découpler la seconde borne de la seconde bobine d'inductance et le second bus de tension (402b), et
dans laquelle le circuit de commande agit pour générer les premier, second, troisième et quatrième signaux de commande de commutateur en réponse à au moins la tension de la charge au niveau du port de charge.

23. Alimentation UPS selon la revendication 22, dans laquelle le circuit de commande (440) actionne les premier et second commutateurs à des rapports cycliques sensiblement complémentaires, et dans laquelle le circuit de commande actionne les troisième et quatrième commutateurs à des rapports cycliques sensiblement complémentaires.

24. Alimentation UPS selon la revendication 22,
dans laquelle le troisième circuit de commutation comprend :
un cinquième commutateur (Q5) répondant à un cinquième signal de commande de commutateur (SW5) pour coupler et découpler la première prise d'extrémité du premier enroulement du transformateur et le premier bus de tension, et
un sixième commutateur (Q6) répondant à un sixième signal de commande de commutateur (SW6) pour coupler et découpler la première prise d'extrémité du premier enroulement du transformateur et le second bus de tension, et
dans laquelle le circuit de commande agit pour générer les cinquième et sixième signaux de commande de commutateur.

25. Alimentation UPS selon la revendication 24, dans laquelle le circuit de commande (440) contraint les cinquième et sixième commutateurs à fonctionner à des rapports cycliques sensiblement complémentaires d'approximativement 50 %.

26. Alimentation UPS selon la revendication 16, dans laquelle le circuit de convertisseur de courant continu en courant alternatif (436) comprend un circuit de commutation à pont à deux alternances qui couple sélectivement les première et seconde bornes du port de source de courant continu aux première et seconde prises du second enroulement du transformateur.

27. Alimentation UPS selon la revendication 16, dans laquelle le circuit redresseur comprend l'un de :
des première et seconde diodes connectées entre la seconde prise d'extrémité du premier enroulement du transformateur (T1) et des bus respectifs parmi les premier et second bus de tension (402a, b), ou
des premier et second commutateurs connectés entre la seconde prise d'extrémité du premier enroulement du transformateur et les bus respectifs parmi les premier et second bus de tension.

28. Procédé de transfert sélectif d'alimentation à une charge depuis une source de courant alternatif et une source de courant continu, le procédé comprenant les étapes consistant à :
coupler sélectivement la source de courant alternatif aux premier et second bus de tension par l'intermédiaire d'une première bobine d'inductance,
coupler sélectivement la charge aux premier et second bus de tension par l'intermédiaire d'une seconde bobine d'inductance,
coupler sélectivement les premier et second bus de tension à un bus du neutre par l'intermédiaire d'une troisième bobine d'inductance, et
coupler de manière bidirectionnelle la source de courant continu aux premier et second bus de tension afin de permettre un transfert d'alimentation bidirectionnel entre la source de courant continu et les premier et second bus de tension.

29. Procédé selon la revendication 28, dans lequel ladite étape de couplage bidirectionnel comprend l'étape consistant à coupler de manière inductive la source de courant continu aux premier et second bus de tension afin de permettre un transfert d'alimentation bidirectionnel entre la source de courant continu et les premier et second bus de tension de sorte qu'une tension au niveau de la source de courant continu soit maintenue dans une proportion sensiblement fixe par rapport aux première et seconde tensions de courant continu au niveau des bus respectifs parmi les premier et second bus de tension.

30. Procédé selon la revendication 29, dans lequel le couplage sélectif des premier et second bus de tension à un bus du neutre par l'intermédiaire d'une troisième bobine d'inductance comprend l'étape consistant à coupler de manière sélective les premier et second bus de tension à un bus du neutre par l'intermédiaire d'un transformateur de sorte que les première et seconde tensions de courant continu soient contraintes à présenter des amplitudes sensiblement égales.

31. Procédé selon la revendication 30, comprenant en outre les étapes consistant à :
coupler de manière sélective le port de source de courant alternatif aux premier et second bus de tension de sorte que le courant au niveau des sources de courant alternatif soit modifié jusqu'à une limite de courant afin de maintenir la tension de la charge à la tension nominale, et
lorsque le courant au niveau du port de source de courant alternatif atteint la limite de courant et la tension, transférer la puissance au port de charge depuis à la fois la source de courant alternatif et la source de courant continu afin de maintenir la tension de la charge à la tension nominale.

32. Procédé selon la revendication 29,
dans lequel ladite étape de couplage sélectif de la source de courant alternatif comprend l'étape consistant à coupler de manière sélective un bus de phase de la source de courant alternatif aux bus respectifs parmi les premier et second bus de tension d'une manière sensiblement complémentaire, et
dans lequel ladite étape consistant à coupler sélectivement la charge comprend l'étape consistant à coupler sélectivement la charge aux bus respectifs parmi les premier et second bus de tension d'une manière sensiblement complémentaire.

33. Procédé selon la revendication 30,
dans lequel ladite étape consistant à coupler de manière sélective les premier et second bus de tension à un bus du neutre par l'intermédiaire d'une troisième bobine d'inductance comprend les étapes consistant à :
coupler de manière sélective le bus du neutre aux premier et second bus de tension par l'intermédiaire d'une première partie d'un premier enroulement d'un transformateur comportant des premier et second enroulements couplés de manière inductive,
coupler dans un mode de redressement les premier et second bus de tension au bus du neutre par l'intermédiaire d'une seconde partie du premier enroulement du transformateur, et
dans lequel un couplage bidirectionnel comprend le fait de coupler de manière sélective les première et seconde bornes de la source de courant continu aux première et seconde prises d'extrémité du second enroulement du transformateur.
